# EUROPEAN PATENT APPLICATION

(11) **EP 4 534 952 A1**
(43) Date of publication of application: **09.04.2025**
(21) Application number: 23815743.2
(22) Date of filing: 15.05.2023
(51) Int. Cl.: G01B 15/04, G01N 23/046, G02B 6/44

(54) **INDICATOR CALCULATION METHOD FOR FINE WIRES, QUALITY EVALUATION METHOD FOR OPTICAL CABLE, AND OPTICAL CABLE**

(30) Priority: 01.06.2022 JP 2022089834
(71) Applicant: SUMITOMO ELECTRIC INDUSTRIES, LTD., Osaka-shi, Osaka 541-0041 (JP)
(72) Inventor: HOSHINA, Yutaka, Osaka-shi, Osaka 541-0041 (JP); SHIOZAKI, Manabu, Osaka-shi, Osaka 541-0041 (JP)
(74) Representative: Müller-Boré & Partner Patentanwälte PartG mbB
(86) International application number: PCT/JP2023/018057
(87) International publication number: WO 2023/233983

(57) **Abstract**

A method of calculating an indicator of a thin wire according to the present disclosure includes: obtaining X-ray images of a plurality of cross sections of a cable having a plurality of thin wires, the plurality of cross sections being perpendicular to a long-side direction of the cable; finding a central position of each of the plurality of thin wires from each of the X-ray images of the plurality of cross sections; and finding an indicator representing a curve of each thin wire based on the central position of the thin wire.

## Description

### TECHNICAL FIELD

The present disclosure relates to a method of calculating an indicator of a thin wire, a method of evaluating quality of an optical cable, and an optical cable. The present application claims priority based on Japanese Patent Application No. 2022-089834 filed on June 1, 2022. The entire contents of the Japanese Patent Application are incorporated herein by reference.

### BACKGROUND ART

An optical cable has a configuration in which a large number (typically, several hundreds to several thousands) of optical fibers are bundled. It has been known that transmission loss of the optical cable becomes large at a low temperature such as -20°C (for example, see PTL 1).

### CITATION LIST

### PATENT LITERATURE

PTL 1: Japanese Patent Laying-Open No. 2014-085554

### SUMMARY OF INVENTION

A method of calculating an indicator of a thin wire according to the present disclosure includes: obtaining X-ray images of a plurality of cross sections of a cable, representatively an optical cable, having a plurality of thin wires, each of the plurality of cross sections being perpendicular to a long-side direction of the cable; finding a central position of each of the plurality of thin wires from each of the X-ray images of the plurality of cross sections; and finding an indicator representing a curve of each thin wire based on the central position of the thin wire.

A method of calculating an indicator of a thin wire according to the present disclosure includes: obtaining X-ray images of a plurality of cross sections of a cable, representatively an optical cable, having a plurality of thin wires, each of the plurality of cross sections being perpendicular to a long-side direction of the cable; finding a central position of each of the plurality of thin wires from each of the X-ray images of the plurality of cross sections; and finding an indicator representing a curve of the plurality of thin wires as a whole based on the central position of each thin wire.

A method of evaluating quality of an optical cable according to the present disclosure includes: obtaining X-ray images of a plurality of cross sections perpendicular to a long-side direction of an optical cable having a plurality of optical fibers; finding a central position of each of the plurality of optical fibers from each of the X-ray images of the plurality of cross sections; finding an indicator representing a curve of the plurality of optical fibers as a whole based on the central position of each thin wire; and determining whether or not the optical cable conforms to a quality criterion based on a comparison between the indicator and a criterion value.

An optical cable according to the present disclosure includes a plurality of optical fibers, wherein an inverse number of a sum of an average value of local curvatures of the plurality of optical fibers and a value three times as large as a standard deviation of the local curvatures at -40°C is 20 mm or more.

### BRIEF DESCRIPTION OF DRAWINGS

Fig. 1 is a diagram showing a configuration of an optical cable quality evaluation system 300 according to a first embodiment.
Fig. 2 is a diagram showing a configuration of an evaluation device 302.
Fig. 3 is a diagram showing exemplary X-ray images 60(i) of cross sections of a sample in which a large number of thin wires are bundled.
Fig. 4 is a diagram showing an example in which regions of cross sections of optical fibers and central positions of the regions of the cross sections of the optical fibers are detected.
Fig. 5 is a diagram showing an example of connecting the central positions of the cross sections of the optical fibers.
Fig. 6 is a diagram showing exemplary data representing a locus of each optical fiber.
Fig. 7 is a diagram for illustrating an example of calculating a curvature radius of one optical fiber.
Fig. 8 is a flowchart showing a procedure of calculating an indicator of an optical fiber according to the first embodiment.
Fig. 9 is a diagram for illustrating an example of calculating an extra length ratio of one optical fiber.
Fig. 10 is a diagram showing an example of dividing an X-ray image.
Fig. 11 is a flowchart showing a procedure of calculating an indicator of an optical fiber according to a third embodiment.
Fig. 12 is a diagram showing a configuration of an evaluation device 302A according to a fourth embodiment.
Fig. 13 is a flowchart showing a procedure of a method of evaluating quality of an optical cable 400.
Fig. 14 is a diagram showing an example in which an X-ray image is binarized.
Fig. 15 is a diagram showing an example in which a distance conversion image obtained by performing distance conversion onto the binarized image is binarized using a low threshold value α.
Fig. 16 is a diagram showing an example in which a distance conversion image obtained by performing distance conversion onto the binarized image is binarized using a high threshold value β.
Fig. 17A is a diagram showing an exemplary relation between a threshold value and the number of partial regions generated using the threshold value.
Fig. 17B is a diagram showing a partial region generated when the threshold value is 0.07.
Fig. 17C is a diagram showing partial regions generated when the threshold value is 0.08.
Fig. 17D is a diagram showing partial regions generated when the threshold value is 0.15.
Fig. 17E is a diagram showing partial regions generated when the threshold value is 0.16.
Fig. 17F is a diagram showing partial regions generated when the threshold value is 0.25.
Fig. 17G is a diagram showing partial regions generated when the threshold value is 0.26.
Fig. 17H is a diagram showing partial regions generated when the threshold value is 0.81.
Fig. 17I is a diagram showing partial regions generated when the threshold value is 0.82.
Fig. 18A is a diagram showing an exemplary relation between a threshold value and the number of partial regions generated using the threshold value.
Fig. 18B is a diagram showing a partial region generated when the threshold value is 0.39.
Fig. 18C is a diagram showing partial regions generated when the threshold value is 0.40.
Fig. 18D is a diagram showing partial regions generated when the threshold value is 0.65.
Fig. 18E is a diagram showing partial regions generated when the threshold value is 0.66.
Fig. 18F is a diagram showing partial regions generated when the threshold value is 0.88.
Fig. 18G is a diagram showing partial regions generated when the threshold value is 0.89.
Fig. 19 is a diagram showing a configuration of an image processing unit 304 according to a fifth embodiment.
Fig. 20 is a flowchart showing a processing procedure of image processing unit 304.
Fig. 21 is a cross sectional view of an optical cable.
Fig. 22 is a diagram showing a bundle of a plurality of optical fibers.
Fig. 23 is a diagram showing a configuration of evaluation device 302 when a function of evaluation device 302 is implemented using software.
Fig. 24 is a schematic diagram of an X-ray apparatus according to an Appendix.
Fig. 25 is a schematic enlarged cross sectional view showing a cooling container according to the Appendix for accommodating a sample in the Appendix and showing one step of a method of obtaining an X-ray image of the sample.
Fig. 26 is a schematic enlarged cross sectional view of the cooling container according to the Appendix along a cross sectional line III-III shown in Fig. 2.
Fig. 27 is a flowchart of a method of obtaining an X-ray image of a sample cooled to a low temperature lower than a room temperature in the Appendix.
Fig. 28 is a diagram showing an exemplary X-ray image of the sample in the Appendix.
Fig. 29 is a schematic enlarged cross sectional view showing one step of a method of obtaining each of a first reference X-ray image and a second reference X-ray image of a reference sample in the Appendix.
Fig. 30 is a diagram showing an exemplary first reference X-ray image in the Appendix.
Fig. 31 is a diagram showing an exemplary second reference X-ray image in the Appendix.
Fig. 32 is a schematic diagram of an image processing system according to the Appendix.
Fig. 33 is a schematic diagram showing an exemplary hardware configuration of a server device according to the Appendix.
Fig. 34 is a schematic diagram showing an exemplary hardware configuration of a terminal device according to the Appendix.
Fig. 35 is a functional block diagram showing a functional configuration of the server device according to the Appendix.
Fig. 36 is a diagram showing a data structure of a training data set according to the Appendix.
Fig. 37 is a block diagram for illustrating details of a learning function of processing of a training unit according to the Appendix.
Fig. 38 is a diagram showing an exemplary provisional corrected X-ray image according to the Appendix.
Fig. 39 is a flowchart of learning processing according to the Appendix.
Fig. 40 is a functional block diagram showing a functional configuration of the terminal device according to the Appendix.
Fig. 41 is a diagram showing an exemplary corrected X-ray image of the sample according to the Appendix.
Fig. 42 is a flowchart of an X-ray image processing method according to according to the Appendix.

### DETAILED DESCRIPTION

### [Problem to be Solved by the Present Disclosure]

There has not been known a method of detecting and evaluating individual shapes of thin wires such as optical fibers included in a cable. Therefore, what shape the optical fiber has at a low temperature cannot be known.

Therefore, an object of the present disclosure is to provide: a method of calculating an indicator of a thin wire so as to calculate an indicator for evaluating a degree of curve of each thin wire such as an optical fiber; a method of evaluating quality of an optical cable using such an indicator; and an optical cable in which such an indicator satisfies a quality criterion.

### [Advantageous Effect of the Present Disclosure]

According to the method of calculating an indicator of a thin wire in the present disclosure, it is possible to calculate the indicator for evaluating the curve of each of the large number of thin wires such as optical fibers using the X-ray images of the plurality of cross sections perpendicular to the long-side direction.

According to the method of evaluating quality of an optical cable in the present disclosure, it is possible to determine whether or not optical cable 400 conforms to the quality criterion.

According to the optical cable in the present disclosure, the optical cable conforms to such a quality criterion that transmission loss is 2 dB/km or less.

### [Description of Embodiments of the Present Disclosure]

First, embodiments of the present disclosure will be listed and described.
(1) A method of calculating an indicator of a thin wire according to the present disclosure includes: obtaining X-ray images 460(i) of a plurality of cross sections of a cable having a plurality of thin wires, each of the plurality of cross sections being perpendicular to a long-side direction of the cable; finding a central position of each of the plurality of thin wires from each of X-ray images 460(1) to 460(N) of the plurality of cross sections; and finding an indicator representing a curve of each thin wire based on the central position of the thin wire. Thus, it is possible to calculate an indicator for evaluating the curve of each of the large number of thin wires such as optical fibers using X-ray images 460(i) of the plurality of cross sections perpendicular to the long-side direction.
(2) The method of calculating an indicator of a thin wire according to (1) further includes finding an indicator representing a curve of the plurality of thin wires as a whole based on the indicator representing the curve of each thin wire. Thus, it is possible to calculate the indicator representing the curve of the plurality of thin wires such as optical fibers as a whole. As a result, quality of the optical cable can be known.
(3) In the method of calculating an indicator according to (2), the finding the indicator representing the curve of each thin wire includes finding a locus of the thin wire by connecting central positions of the thin wire in the plurality of cross sections and calculating a local curvature radius of the thin wire based on the locus. Thus, it is possible to calculate the indicator for evaluating the curve of the thin wire such as an optical fiber in accordance with the local curvature radius.
(4) In the method of calculating an indicator according to (3), the finding the indicator representing the curve of the plurality of thin wires as a whole includes calculating a plurality of local curvature radii of each thin wire for the plurality of thin wires and calculating, as the indicator representing the curve of the plurality of thin wires as a whole, any one or a weighted addition/subtraction value of any two or more of an average value, a standard deviation, a minimum value, and a maximum value of the plurality of calculated local curvature radii or any one or a weighted addition/subtraction value of any two or more of an average value, a standard deviation, a minimum value, and a maximum value of local curvatures that are inverse numbers of the plurality of calculated local curvature radii. Thus, the statistical value of the local curvature radii or curvatures of the plurality of optical fibers can be used to calculate the indicator representing the curve of the plurality of optical fibers as a whole.
(5) In the method of calculating an indicator according to (2), the finding the indicator representing the curve of each thin wire includes finding a locus of the thin wire by connecting central positions of the thin wire in the plurality of cross sections, and calculating an extra length ratio of the thin wire based on the locus. Thus, it is possible to calculate the indicator for evaluating the curve of the thin wire such as an optical fiber in accordance with the extra length ratio.
(6) In the method of calculating an indicator according to (5), the finding the indicator representing the curve of the plurality of thin wires as a whole includes calculating the extra length ratio of each thin wire for the plurality of thin wires and calculating, as the indicator representing the curve of the plurality of thin wires as a whole, any one or a weighted addition/subtraction value of any two or more of an average value, a standard deviation, a minimum value, and a maximum value of the plurality of calculated extra length ratios. Thus, the statistical value of the extra length ratios of the plurality of optical fibers can be used to calculate the indicator representing the curve of the plurality of optical fibers as a whole.
(7) A method of calculating an indicator of a thin wire according to the present disclosure includes: obtaining X-ray images 460(1) to 460(N) of a plurality of cross sections of a cable having a plurality of thin wires, each of the plurality of cross sections being perpendicular to a long-side direction of the cable; finding a central position of each of the plurality of thin wires from each of X-ray images 460(1) to 460(N) of the plurality of cross sections; and finding an indicator representing a curve of the plurality of thin wires as a whole based on the central position of each thin wire. Thus, the X-ray images 60(i) of the plurality of cross sections perpendicular to the long-side direction can be used to calculate the indicator for evaluating the curve of the plurality of thin wires such as optical fibers as a whole.
(8) In the method of calculating an indicator according to (7), the finding the indicator representing the curve of the plurality of thin wires as a whole based on the central position of each thin wire includes calculating the number or wire density of the thin wires included in each of a plurality of blocks obtained by dividing each X-ray image 460(i), calculating a variance value of the numbers or wire densities of the thin wires in the plurality of blocks, and calculating, as the indicator representing the curve of the plurality of thin wires as a whole, any one or a weighted addition/subtraction value of any two or more of an average value, a standard deviation, a minimum value, and a maximum value of the variance values of the numbers or wire densities of the thin wires in the plurality of X-ray images 460(1) to 460(N). Thus, the statistical value of the variance values of the numbers or wire densities of the optical fibers in the blocks of the X-ray images can be used to calculate the indicator representing the curve of the plurality of optical fibers as a whole.
(9) In the method of calculating an indicator of a thin wire according to any one of (1) to (8), the finding the central position of each of the plurality of thin wires includes: generating a first binarized image constituted of a plurality of pixels each having a first pixel value or a second pixel value by binarizing X-ray image 460(i); detecting each region in which pixels each having the first pixel value in the first binarized image are in succession; for each pixel in each region, calculating a shortest distance to a pixel having the second pixel value; for each region, generating a distance conversion image in which the shortest distance is represented by a pixel value; for each region, generating a binarized distance conversion image constituted of a plurality of pixels each having the first pixel value or the second pixel value by binarizing the distance conversion image based on a threshold value TH; for each region, finding, as a count value, the number of partial regions in each of which pixels each having the first pixel value and each included in the binarized distance conversion image are in succession; and for each region, sequentially increasing threshold value TH from an initial value until the count value is changed to be decreased so as to obtain a plurality of count values, and in a case where a ratio R of threshold value TH when the count value becomes a maximum count value among the plurality of count values is equal to or more than a criterion value, detecting, as the central position of the thin wire, a position of any pixel in the partial region included in the binarized distance conversion image generated using any of a plurality of threshold values TH when the count value becomes the maximum count value. Thus, the threshold value for binarizing the distance conversion image can be appropriately set for each local region in the X-ray image.
(10) A method of evaluating quality of an optical cable 400 according to the present disclosure includes: obtaining X-ray images 460(1) to 460(N) of a plurality of cross sections of an optical cable 400 having a plurality of optical fibers, each of the plurality of cross sections being perpendicular to a long-side direction of optical cable 400; finding a central position of each of the plurality of optical fibers from each of X-ray images 460(1) to 460(N) of the plurality of cross sections; finding an indicator representing a curve of the plurality of optical fibers as a whole based on the central position of each thin wire; and determining whether or not optical cable 400 conforms to a quality criterion based on a comparison between the indicator and a criterion value. Thus, it is possible to determine whether or not optical cable 400 conforms to the quality criterion.
(11) In the method of evaluating quality of an optical cable 400 according to (10), the obtaining X-ray images 460(1) to 460(N) of the plurality of cross sections of optical cable 400 having the plurality of optical fibers, each of the plurality of cross sections being perpendicular to the long-side direction of optical cable 400, includes obtaining X-ray images 460(1) to 460(N) of the plurality of cross sections of optical cable 400 that is placed under an environment of -40°C, the finding the indicator representing the curve of the plurality of optical fibers as a whole based on the central position of each optical fiber includes finding a locus of the optical fiber by connecting central positions of the optical fiber in the plurality of cross sections, calculating a plurality of local curvature radii of each optical fiber for the plurality of optical fibers based on the locus, and calculating, as the indicator representing the curve of the plurality of optical fibers as a whole, an inverse number of a sum of an average value of local curvatures and a value three times as large as a standard deviation of the local curvatures, the local curvatures being inverse numbers of the plurality of calculated local curvature radii, and the determining includes determining that optical cable 400 conforms to the quality criterion when the indicator is 20 mm or more. Thus, it is possible to determine whether or not such a quality criterion that transmission loss of optical cable 400 is 2 dB/km or less is satisfied.
(12) In the method of evaluating quality of an optical cable 400 according to (10) or (11), the finding the central position of each of the plurality of optical fibers includes: generating a first binarized image constituted of a plurality of pixels each having a first pixel value or a second pixel value by binarizing X-ray image 460(i); detecting each region in which pixels each having the first pixel value in the first binarized image are in succession; for each pixel in each region, calculating a shortest distance to a pixel having the second pixel value; for each region, generating a distance conversion image in which the shortest distance is represented by a pixel value; for each region, generating a binarized distance conversion image constituted of a plurality of pixels each having the first pixel value or the second pixel value by binarizing the distance conversion image based on a threshold value TH; for each region, finding, as a count value, the number of partial regions in each of which pixels each having the first pixel value and each included in the binarized distance conversion image are in succession; and for each region, sequentially increasing threshold value TH from an initial value until the count value is changed to be decreased so as to obtain a plurality of count values, and in a case where a ratio R of threshold value TH when the count value becomes a maximum count value among the plurality of count values is equal to or more than a criterion value, detecting, as the central position of the optical fiber, a position of any pixel in the partial region included in the binarized distance conversion image generated using any of a plurality of threshold values TH when the count value becomes the maximum count value. Thus, the threshold value for binarizing the distance conversion image can be appropriately set for each local region in the X-ray image.
(13) In an optical cable 400 according to the present disclosure and including a plurality of optical fibers, an inverse number of a sum of an average value of local curvatures of the plurality of optical fibers and a value three times as large as a standard deviation of the local curvatures at -40°C is 20 mm or more. Thus, it is possible to obtain an optical cable in which transmission loss is 2 dB/km or less.

### [Details of Embodiments of the Present Disclosure]

Next, the embodiments of the present disclosure will be described in detail with reference to figures. It should be noted that in each of the below-described figures, the same or corresponding portions are denoted by the same reference characters and will not be described repeatedly. At least parts of configurations of the embodiments described below may be freely combined.

### (First Embodiment)

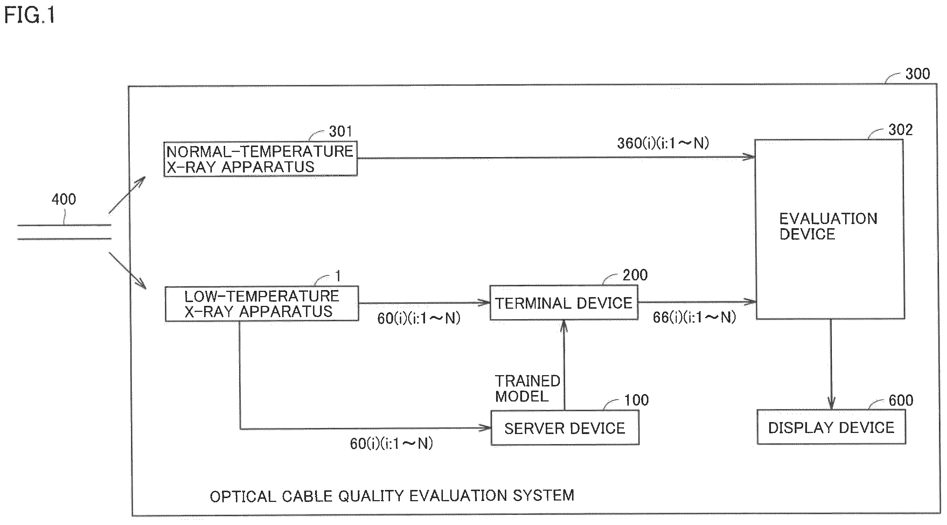

Fig. 1 is a diagram showing a configuration of an optical cable quality evaluation system 300 according to a first embodiment. Optical cable quality evaluation system 300 includes a normal-temperature X-ray apparatus 301, a low-temperature X-ray apparatus 1, a server device 100, a terminal device 200, an evaluation device 302, and a display device 600.

Normal-temperature X-ray apparatus 301 outputs normal-temperature X-ray images 360(i) (i = 1 to N) of a plurality of cross sections of an optical cable 400 perpendicular to a long-side direction of optical cable 400, the normal-temperature X-ray images 360(i) being obtained by performing X-ray CT imaging onto optical cable 400 that is placed under a normal-temperature environment. A normal-temperature X-ray image 360(i) of a cross section thereof per length α in the long-side direction of optical cable 400 is obtained. This group of the X-ray images of the cross sections is obtained for a portion of about 10 to 20 cm in the entire sample. N is about several thousands.

Low-temperature X-ray apparatus 1 outputs low-temperature X-ray images 60(i) (i = 1 to N) of a plurality of cross sections of optical cable 400 perpendicular to the long-side direction of optical cable 400, the low-temperature X-ray images 60(i) being obtained by performing X-ray CT imaging onto optical cable 400 that is placed under a low-temperature environment. A low-temperature X-ray image 60(i) of a cross section thereof per length α in the long-side direction of optical cable 400 is obtained.

Low-temperature X-ray apparatus 1 includes an X-ray imaging apparatus and a cooling container. The X-ray imaging apparatus includes an X-ray source that emits an X-ray, a stage that supports the cooling container, and an X-ray detector that detects the X-ray having passed through the cooling container. The cooling container includes a hollow container and a heat insulating container that accommodates the hollow container. The hollow container includes a tube and a bottom plate. The tube includes a first end and a second end opposite to the first end. The bottom plate closes the first end of the tube. A sample (optical cable 400) and a coolant that cools the sample are accommodated in an accommodation space defined by the tube and the bottom plate. The sample is immersed in the coolant and is supported by at least one of the tube or the bottom plate. Each of the tube and the heat insulating container is composed of a low-density material. A first opening communicating with the accommodation space is provided in the second end of the tube. A through hole communicating with the first opening is provided in the heat insulating container. Details of the cooling container will be described in the Appendix.

Server device 100 generates a trained model for inferring a low-temperature corrected X-ray image from the low-temperature X-ray image. Server device 100 obtains reference image IDs, a plurality of first reference X-ray images, and a plurality of second reference X-ray images. Server device 100 generates a trained model for performing image processing to clarify the low-temperature X-ray image of optical cable 400 by learning processing using the first reference X-ray images and the second reference X-ray images. The generated trained model is transmitted (distributed) to terminal device 200. Details of server device 100 will be described in the Appendix.

Terminal device 200 generates a low-temperature corrected X-ray image 66(i) from low-temperature X-ray image 60(i) based on the trained model. Terminal device 200 includes: an X-ray image receiving unit that receives an X-ray image of optical cable 400, the X-ray image being obtained by imaging optical cable 400 for a first period of time at a low temperature lower than a room temperature; and an image processing unit. The image processing unit inputs the low-temperature X-ray image of optical cable 400 into a neural network so as to generate the low-temperature corrected X-ray image of optical cable 400, the low-temperature corrected X-ray image being clearer than the low-temperature X-ray image of optical cable 400. The neural network is generated by learning using a training data set. The training data set includes a first reference X-ray image and a second reference X-ray image, the first reference X-ray image being obtained by imaging a reference optical cable for a second period of time without cooling the reference optical cable, the second reference X-ray image being obtained by imaging the reference optical cable for a third period of time without cooling the reference optical cable. The second period of time is 0.5 times or more and 2.0 times or less as long as the first period of time. The third period of time is longer than the first period of time and is longer than the second period of time. Details of terminal device 200 will be described in the Appendix.

Evaluation device 302 evaluates quality of optical cable 400 at the low temperature based on low-temperature corrected X-ray image 66(i). Evaluation device 302 evaluates quality of optical cable 400 at the normal temperature based on normal-temperature X-ray image 360(i).

Display device 600 displays an evaluation result by evaluation device 302.

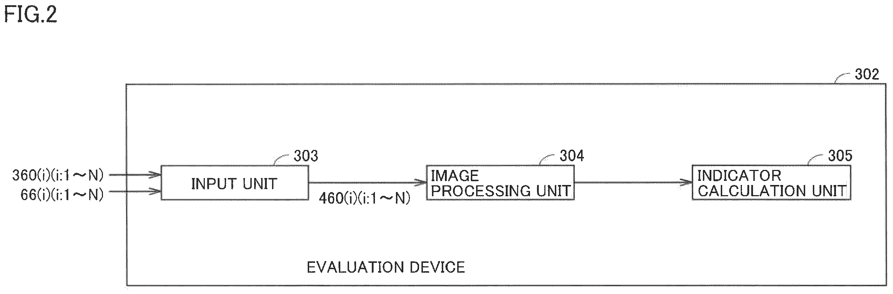

Fig. 2 is a diagram showing a configuration of evaluation device 302.
Evaluation device 302 includes an input unit 303, an image processing unit 304, and an indicator calculation unit 305.

Input unit 303 receives one of normal-temperature X-ray image 360(i) and low-temperature corrected X-ray image 66(i) and transmits it to image processing unit 304 as an X-ray image 460(i).

Image processing unit 304 detects the central position of the cross section of each optical fiber of optical cable 400 included in X-ray image 460(i). Image processing unit 304 detects the central position of the region of the cross section of each optical fiber by using a known method of detecting a position of a pixel at a center of a region of each object from an image including a plurality of objects. As the known method, it is possible to use, for example, a method of binarizing an image, performing distance conversion processing, and regarding, as a central position of each object, a pixel having a high value in the image after the distance conversion.

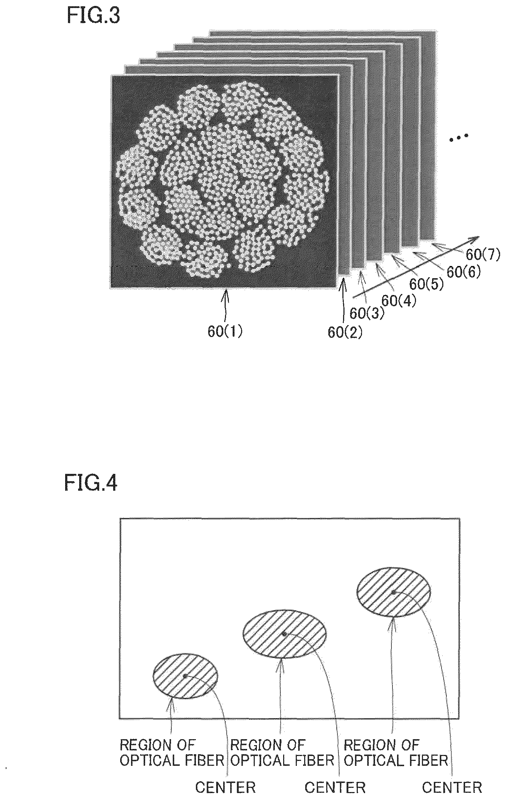

Fig. 3 is a diagram showing exemplary X-ray images 60(i) of cross sections of a sample in which a large number of thin wires are bundled. In general, an X-ray image of a cross section of the sample, such as an optical cable, in which the large number of thin wires are bundled is an image including a portion in which a large number of circular or elliptical white points are very close to one another or a plurality of white points among them are in contact with one another and are integrated as shown in Fig. 3. Fig. 4 is a diagram showing an example in which the regions of the cross sections of the optical fibers and the central positions of the regions of the cross sections of the optical fibers are detected.

Indicator calculation unit 305 calculates an indicator representing a curve of each optical fiber in optical cable 400 based on the central position of the cross section of the optical fiber of optical cable 400 included in X-ray image 460(i).

More specifically, indicator calculation unit 305 finds a locus of the optical fiber by connecting the central position of the cross section of each optical fiber included in X-ray image 460(i) to the closest position among central positions of cross sections of the plurality of optical fibers included in an X-ray image 460(i+1). In the present specification, finding the locus of the optical fiber means finding coordinates of both ends of each of a plurality of successive line segments that approximate an actual locus of the optical fiber, rather than finding the actual locus of the optical fiber itself.

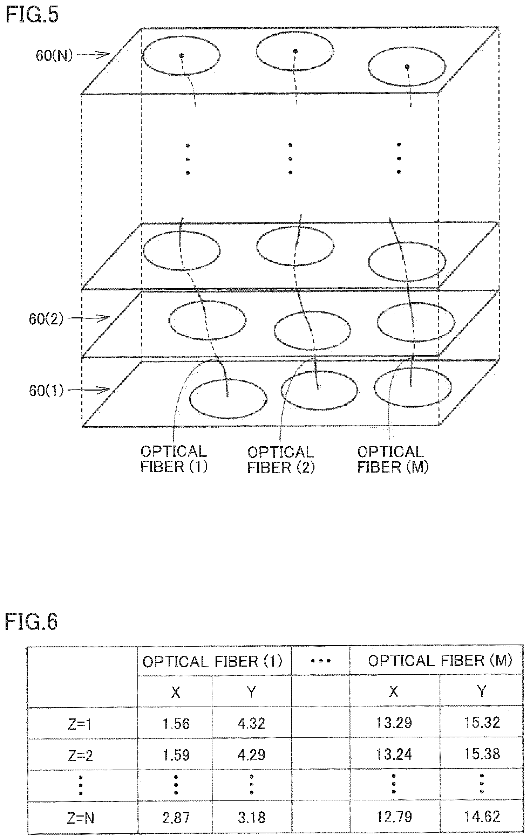

Fig. 5 is a diagram showing an example of connecting the central positions of the cross sections of the optical fibers. Fig. 6 is a diagram showing exemplary data representing a locus of each optical fiber. Here, Z represents positions of the cross sections of the optical cable in the long-side direction, and is normalized such that an interval α between the cross sections is 1. (X, Y) represents the central position of the cross section of each optical fiber. Z represents the position of the optical fiber in the long-side direction. The locus of the optical fiber is approximated by a line segment connecting the central position (X, Y) at z = i and the central position (X, Y) at z = i+1. i = 1 to N-1.

In the first embodiment, indicator calculation unit 305 calculates a local curvature radius of each optical fiber as the indicator representing the curve of the optical fiber.

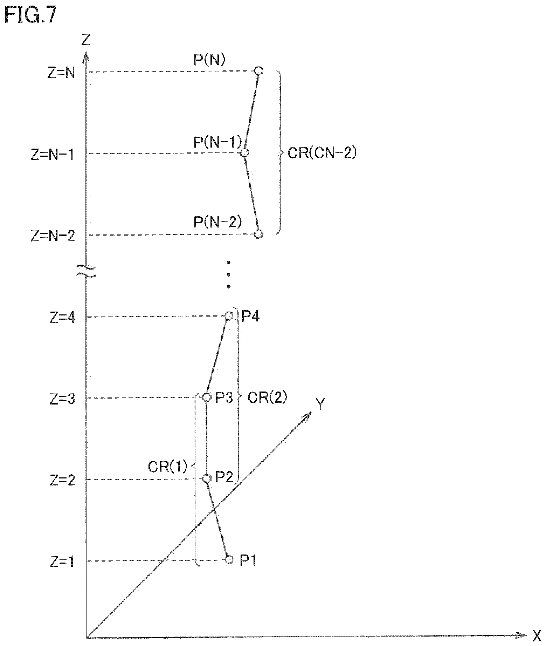

Fig. 7 is a diagram for illustrating an example of calculating a curvature radius of one optical fiber.

Indicator calculation unit 305 can calculate one local curvature radius by three successive points Pᵢ₋₁, Pᵢ, and Pᵢ₊₁. Since the data representing the locus has N points, (N-2) local curvature radii are obtained. Indicator calculation unit 305 may smooth the data representing the locus by a moving average, a filter, or the like, and then may calculate a local curvature radius. Further, indicator calculation unit 305 may calculate one local curvature radius in accordance with four or more successive points.

In the first embodiment, indicator calculation unit 305 further calculates an indicator representing a curve of the plurality of optical fibers as a whole based on the indicator representing the curve of each optical fiber.

When the optical cable includes M optical fibers, indicator calculation unit 305 calculates (N-2) × M local curvature radii at maximum. Since each of N and M is normally a large value such as several hundreds or several thousands, the following method may be employed depending on a purpose: values at a reduced number of locations are calculated; or an average value, maximum value, or minimum value of (N-2) × M certain numerical values is used.

Indicator calculation unit 305 can calculate, as the indicator representing the curve of the plurality of optical fibers as a whole, any one or a weighted addition/subtraction value of any two or more of an average value, a standard deviation, a minimum value, or a minimum value of the (N-2) × M local curvature radii at maximum.

Alternatively, indicator calculation unit 305 can calculate (N-2) × M curvatures at maximum from the (N-2) × M local curvature radii at maximum, and can calculate, as the indicator representing the curve of the plurality of optical fibers as a whole, any one or a weighted addition/subtraction value of any two or more of an average value, a standard deviation, a minimum value, or a maximum value of the (N-2) × M local curvatures at maximum.

For example, when the average value of the (N-2) × M local curvature radii or curvatures at maximum is represented by ME and the standard deviation of the (N-2) × M local curvature radii or curvatures at maximum is represented by SD, indicator calculation unit 305 may calculate (ME±3SD) as the indicator representing the curve of the plurality of optical fibers as a whole.

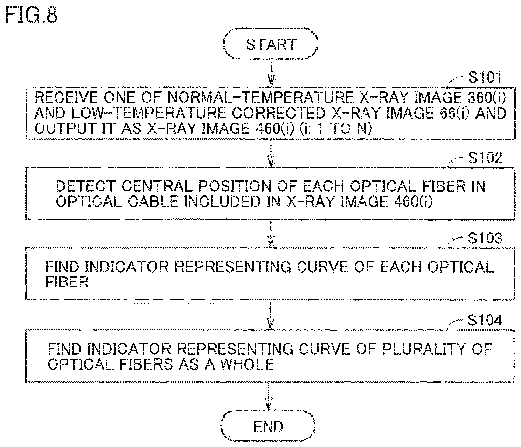

Fig. 8 is a flowchart showing a procedure of calculating an indicator of an optical fiber according to the first embodiment.

In a step S101, input unit 303 receives one of normal-temperature X-ray image 360(i) and low-temperature corrected X-ray image 66(i) and sends it to image processing unit 304 as X-ray image 460(i).

In a step S102, image processing unit 304 detects the central position of each optical fiber of optical cable 400 included in X-ray image 460(i).

In a step S103, indicator calculation unit 305 finds the indicator representing the curve of each optical fiber in optical cable 400 based on the central position of the fiber of optical cable 400 included in X-ray image 460(i). More specifically, indicator calculation unit 305 calculates the locus of each optical fiber by connecting the central position of the cross section of each optical fiber included in X-ray image 460(i) to the closest position among the central positions of the cross sections of the plurality of optical fibers included in X-ray image 460(i+1). In the first embodiment, indicator calculation unit 305 calculates the local curvature radius of each optical fiber as the indicator representing the curve of each optical fiber.

In a step S104, indicator calculation unit 305 finds the indicator representing the curve of the plurality of optical fibers as a whole based on the indicator representing the curve of each optical fiber. In the first embodiment, when the optical cable includes M optical fibers, indicator calculation unit 305 calculates (N-2) × M local curvature radii at maximum. Indicator calculation unit 305 calculates, as the indicator representing the curve of the plurality of optical fibers as a whole, any one or a weighted addition value of any two or more of an average value, a standard deviation, or a minimum value of the (N-2) × M local curvature radii at maximum. Alternatively, indicator calculation unit 305 calculates the (N-2) × M local curvatures at maximum from the (N-2) × M local curvature radii at maximum, and calculates, as the indicator representing the curve of the plurality of optical fibers as a whole, any one or a weighted addition value of any two or more of an average value, a standard deviation, and a maximum value of the (N-2) × M local curvatures at maximum.

### (Second Embodiment)

In a second embodiment, indicator calculation unit 305 calculates an extra length ratio of each optical fiber as the indicator representing the curve of each optical fiber.

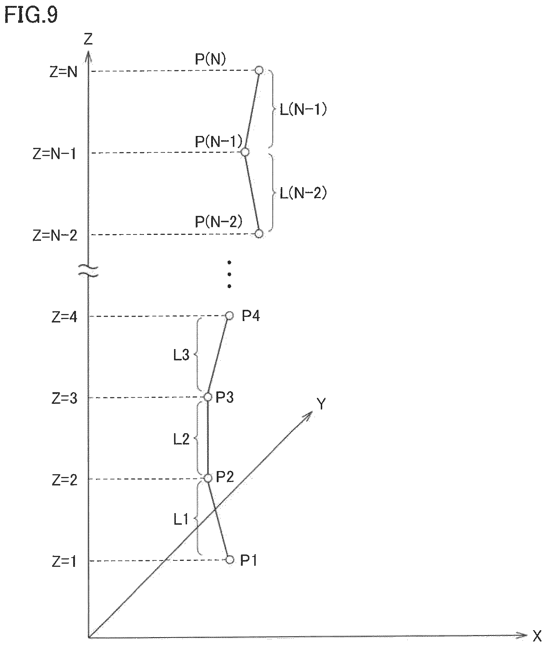

Fig. 9 is a diagram for illustrating an example of calculating an extra length ratio of one optical fiber. With two successive points Pᵢ and Pᵢ₊₁, a length Lᵢ between Pᵢ and Pᵢ₊₁ is obtained. Since the data representing the locus has N points, the total length of the optical fiber is obtained by summing up (N-1) lengths Lᵢ. By dividing the total length of the optical fiber by the length of a corresponding region in the Z direction (length direction), the extra length ratio of the optical fiber can be obtained.

In the second embodiment, indicator calculation unit 305 further calculates the indicator representing the curve of the plurality of optical fibers as a whole based on the indicator representing the curve of each optical fiber.

When the optical cable includes M optical fibers, indicator calculation unit 305 calculates M extra length ratios. Indicator calculation unit 305 can calculate, as the indicator representing the curve of the plurality of optical fibers as a whole, any one or a weighted addition/subtraction value of any two or more of an average value, a standard deviation, a minimum value, and a maximum value of the M extra length ratios. For example, when the average value of the M extra length ratios is represented by ME and the standard deviation of the M extra length ratios is represented by SD, indicator calculation unit 305 may calculate (ME±3SD) as the indicator representing the curve of the plurality of optical fibers as a whole.

### (Third Embodiment)

In a third embodiment, indicator calculation unit 305 calculates the indicator representing the curve of the plurality of optical fibers in optical cable 400 as a whole based on the central position of the cross section of each optical fiber of optical cable 400 included in X-ray image 460(i).

Indicator calculation unit 305 calculates the number or wire density of the optical fibers included in each of a plurality of blocks obtained by dividing X-ray image 460(i), based on the central positions of the cross sections of the optical fibers in X-ray image 460(i).

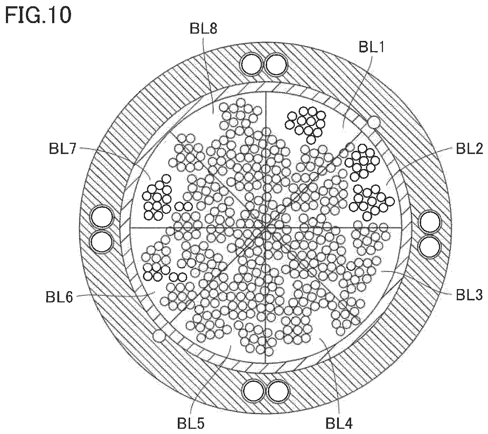

Fig. 10 is a diagram showing an example of dividing the X-ray image.

In this example, the X-ray image is divided into a plurality of blocks BL1 to BL8. The number or wire density of the optical fibers is different among the blocks. As the curve of the plurality of optical fibers as a whole is larger, a variance value of the numbers or wire densities of the optical fibers among the blocks is larger. In this example, the X-ray image is divided in a peripheral direction, but as another example, the X-ray image may be divided in a radial direction of the cable.

Indicator calculation unit 305 calculates a variance value VA(i) of the numbers or wire densities of the optical fibers among the plurality of blocks in X-ray image 460(i). Indicator calculation unit 305 can calculate, as the indicator representing the curve of the plurality of optical fibers as a whole, any one or a weighted addition/subtraction value of any two or more of an average value, a standard deviation, a minimum value, or a maximum value of variance values VA(i) of the optical fibers in the N X-ray images. For example, when the average value of N variance values VA(i) is represented by ME and the standard deviation of N variance values VA(i) is represented by SD, indicator calculation unit 305 may calculate ME±3SD as the indicator representing the curve of the plurality of optical fibers as a whole.

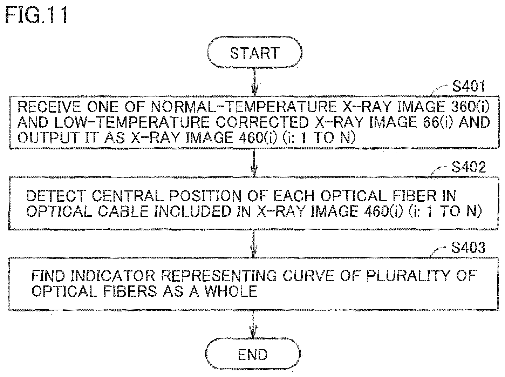

Fig. 11 is a flowchart showing a procedure of calculating an indicator of an optical fiber according to the third embodiment.

In a step S401, input unit 303 receives one of normal-temperature X-ray image 360(i) and low-temperature corrected X-ray image 66(i) and sends it to image processing unit 304 as X-ray image 460(i).

In a step S402, image processing unit 304 detects the central position of each optical fiber in optical cable 400 included in X-ray image 460(i).

In a step S403, indicator calculation unit 305 finds the indicator representing the curve of the plurality of optical fibers as a whole based on the central position of each fiber of optical cable 400 included in X-ray image 460(i). Specifically, indicator calculation unit 305 calculates a variance value VA(i) of the numbers or wire densities of the optical fibers among the plurality of blocks in X-ray image 460(i). Indicator calculation unit 305 calculates, as the indicator representing the curve of the plurality of optical fibers as a whole, any one or a weighted addition value of any two or more of an average value, a standard deviation, or a maximum value of variance values VA(i) of the optical fibers in the N X-ray images.

### (Fourth Embodiment)

Transmission loss is preferably small in optical cable 400. In order to use optical cable 400 for various purposes in future, it is necessary to satisfy such a high quality criterion that the transmission loss is 2 dB/km or less.

The inventors of the present application have found that in order to satisfy such a quality criterion that the transmission loss is 2 dB/km or less, the indicator {the inverse number of (ME+3SD)} described in the first embodiment needs to be 20 mm or more at each of the normal temperature and the low temperature. The average value of the (N-2) × M local curvatures at maximum is represented by ME, and the standard deviation of the (N-2) × M local curvatures at maximum is represented by SD.

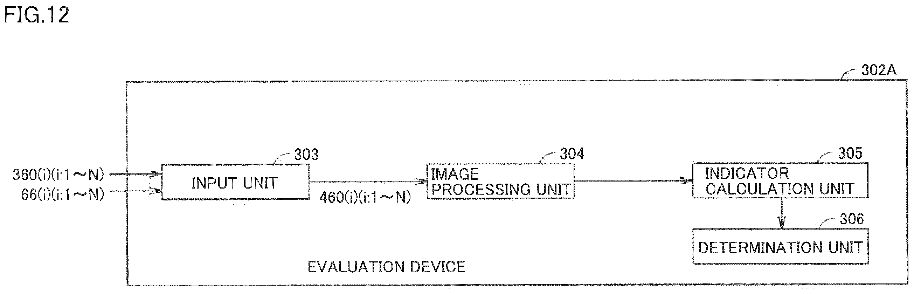

Fig. 12 is a diagram showing a configuration of an evaluation device 302A according to a fourth embodiment.

Evaluation device 302A according to the fourth embodiment is different from evaluation device 302 according to the first embodiment in that evaluation device 302A according to the fourth embodiment includes a determination unit 306.

Determination unit 306 determines that optical cable 400 conforms to the quality criterion when the indicator {the inverse number of (ME+3SD)} is 20 mm or more. Determination unit 306 determines that optical cable 400 does not conform to the quality criterion when the indicator {the inverse number of (ME+3SD)} is less than 20 mm.

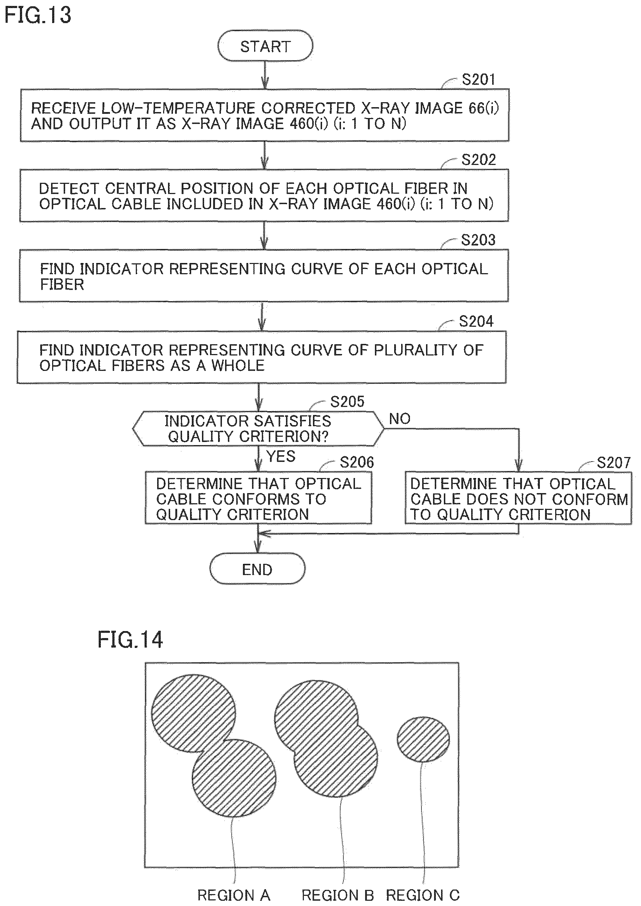

Fig. 13 is a flowchart showing a procedure of a method of evaluating quality of optical cable 400. In practice, the same flow as that of Fig. 13 is also performed onto the group of the X-ray images obtained at the normal temperature; however, since it is known that the curve of each optical fiber becomes larger and the above-described quality criterion is less likely to be satisfied at the low temperature, the following only describes the procedure at the low temperature, which is particularly important.

In a step S201, input unit 303 receives low-temperature corrected X-ray image 66(i) and sends it to image processing unit 304 as X-ray image 460(i).

In a step S202, image processing unit 304 detects the central position of each optical fiber in optical cable 400 included in X-ray image 460(i).

In a step S203, indicator calculation unit 305 finds the indicator representing the curve of each optical fiber in optical cable 400 based on the central position of each fiber of optical cable 400 included in X-ray image 460(i). More specifically, indicator calculation unit 305 calculates the locus of each optical fiber by connecting the central position of the cross section of each optical fiber included in X-ray image 460(i) to the closest position among the central positions of the cross sections of the plurality of optical fibers included in X-ray image 460(i+1). Indicator calculation unit 305 calculates a local curvature radius of each optical fiber as the indicator representing the curve of each optical fiber.

In a step S304, indicator calculation unit 305 finds the indicator representing the curve of the plurality of optical fibers as a whole based on the indicator representing the curve of each optical fiber. When the optical cable has M optical fibers, indicator calculation unit 305 calculates (N-2) × M local curvature radii at maximum. Indicator calculation unit 305 calculates (N-2) × M local curvatures at maximum from the (N-2) × M local curvature radii at maximum. When the average value of the (N-2) × M local curvatures at maximum is represented by ME and the standard deviation of the (N-2) × M local curvatures at maximum is represented by SD, indicator calculation unit 305 calculates {the inverse number of (ME+3SD)} as the indicator representing the curve of the plurality of optical fibers as a whole.

In a step S205, when the indicator {the inverse number of (ME+3SD)} is 20 mm or more, the processing proceeds to a step S206, whereas when the indicator {the inverse number of (ME+3SD)} is less than 20 mm, the processing proceeds to a step S207.

In step S206, determination unit 306 determines that optical cable 400 conforms to the quality criterion.

In step S207, the determination unit determines that optical cable 400 does not conform to the quality criterion.

### (Fifth Embodiment)

Image processing unit 304 detects the central position of the cross section of each optical fiber of optical cable 400. Image processing unit 304 binarizes the X-ray image and performs distance conversion processing so as to generate a distance conversion image. Image processing unit 304 detects a region of the optical fiber by binarizing the distance conversion image using a threshold value. The inventors of the present application have found such a problem that when an X-ray image of a cross section of a cable sample in which a large number of thin wires such as optical fibers are gathered close to one another is binarized using a single threshold value, regions of a plurality of thin wires cannot be cut or may be cut too much.

Fig. 14 is a diagram showing an example in which an X-ray image is binarized. Regions A, B, C are detected by the binarization.

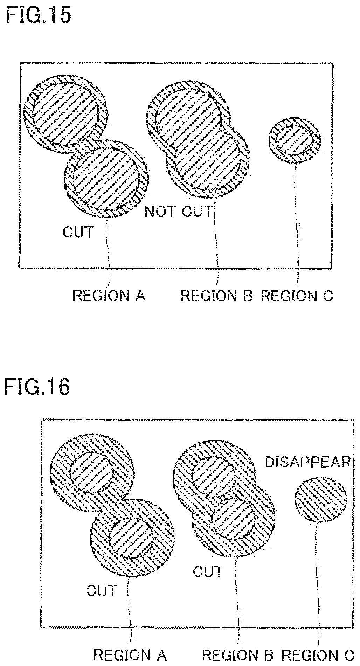

Fig. 15 is a diagram showing an example in which a distance conversion image obtained by performing distance conversion onto the binarized image is binarized using a low threshold value α. Region A has been successfully cut into two partial regions, whereas region B has not been cut into two partial regions.

Fig. 16 is a diagram showing an example in which a distance conversion image obtained by performing distance conversion onto the binarized image is binarized using a high threshold value β. Not only region A but also region B are each successfully cut into two partial regions. However, since threshold value β is too large, region C disappears.

The inventors of the present application have found a method of adaptively setting a threshold value for each local region in an image. An outline thereof is as follows.
(1) The threshold value is successively increased from an initial value for each one region of a plurality of regions obtained by binarizing the X-ray image and performing segmentation.
(2) For each threshold value, how many partial regions the region has been divided into is recorded.
(3) When the number of partial regions is decreased due to the increase in the threshold value, it is determined that the region of the thin wire has disappeared, and the change in the threshold value is stopped.
(4) When a ratio (certainty factor) of the number of threshold values at each of which the number of partial regions is maximum to the number of all the changed threshold values is equal to or more than a criterion value, the maximum number of the partial regions is determined as the number of the optical fibers.

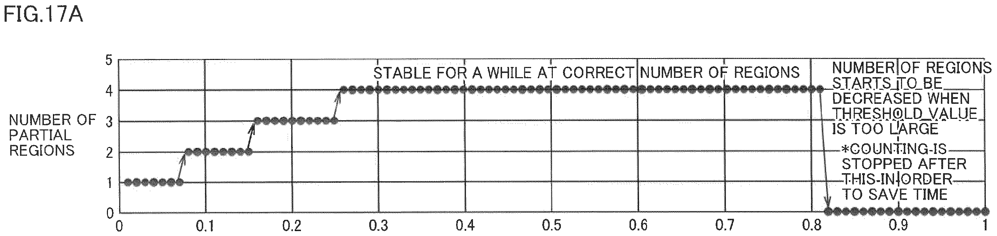

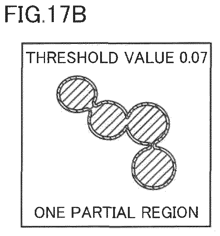

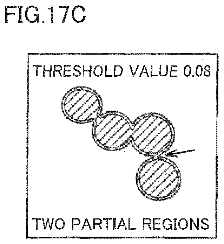

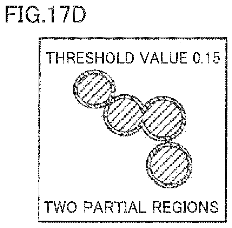

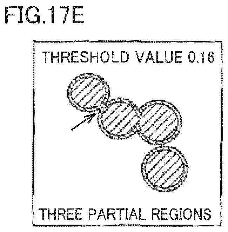

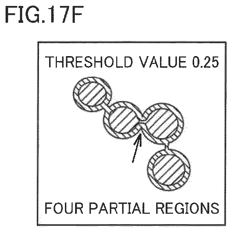

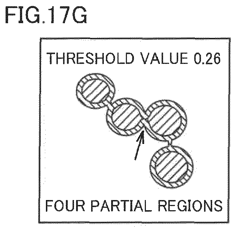

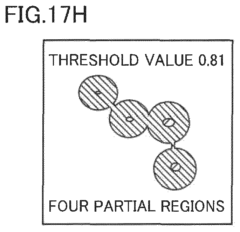

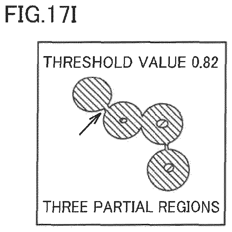

Each of Figs. 17A to 17i is a diagram for illustrating an example in which the number of partial regions generated is changed by changing the threshold value. Here, the threshold value is a value when the maximum value of distance values in the distance conversion image is normalized as 1. Fig. 17A is a diagram showing an exemplary relation between the threshold value and the number of partial regions generated using the threshold value. Figs. 17B, 17C, 17D, 17E, 17F, 17G, 17H, and 17I are diagrams showing partial region(s) generated when the threshold value is 0.07, 0.08, 0.15, 0.16, 0.25, 0.26, 0.81, and 0.82.

When the threshold value is 0.07 or less, the number of the partial regions is one. When the threshold value is 0.08 or more and 0.15 or less, the number of the partial regions is two. When the threshold value is 0.16 or more and 0.25 or less, the number of the partial regions is three. When the threshold value is 0.26 or more and 0.81 or less, the number of the partial regions is four. When the threshold value is 0.82, the number of the partial regions is three.

By increasing the threshold value, the number of the partial regions is increased. It is understandable that the correct number of the partial regions is obtained when the number of the partial regions is maximum. Further, the ratio (certainty factor) of the number of the threshold values at each of which the number of the partial regions is maximum to the number of all the threshold values is "0.68", which is high. Each of the shapes in Figs. 17F, 17G, and 17H are such that four thin wires are apparently in contact with each other even when viewed with the human eyes, and a high certainty factor corresponds to such a fact that the number of the thin wires can be readily determined when viewed with human eyes.

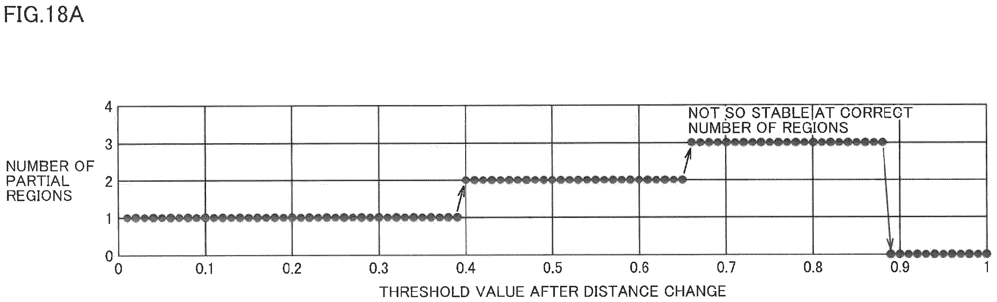

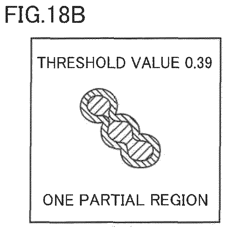

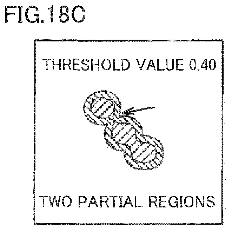

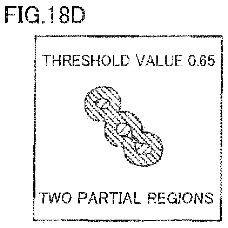

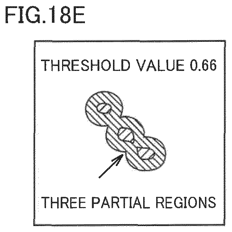

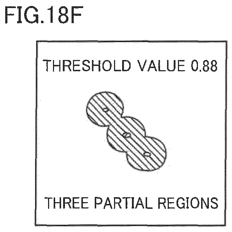

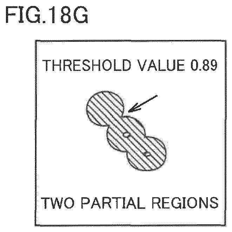

Each of Figs. 18A to 18G is a diagram for illustrating another example in which the number of partial regions generated is changed by changing the threshold value. Fig. 18A is a diagram showing an exemplary relation between the threshold value and the number of partial regions generated using the threshold value. Figs. 18B, 18C, 18D, 18E, 18F, and 18G are diagrams showing partial region(s) generated when the threshold value is 0.39, 0.40, 0.65, 0.66, 0.88, and 0.89.

When the threshold value is 0.39 or less, the number of the partial regions is one. When the threshold value is 0.40 or more and 0.65 or less, the number of the partial regions is two. When the threshold value is 0.66 or more and 0.88 or less, the number of the partial regions is three and is correctly detected. When the threshold value is 0.89 or more, the number of the partial regions is two.

By increasing the threshold value, the number of the partial regions is increased. It is understandable that the correct number of the partial regions is obtained when the number of the partial regions is maximum. However, the ratio (certainty factor) of the number of the threshold values at each of which the number of the partial regions is maximum to the number of all the threshold values is "0.34", which is low. As a matter of fact, as compared with the case where each of the shapes in Figs. 17F, 17G, and 17H is apparently a collection of four thin wires even when viewed with human eyes, it is slightly difficult to determine whether or not the number of the thin wires in each of the shapes in Figs. 18E and 18F is three. It is understandable that the above-described certainty factor coincides with the sense of human.

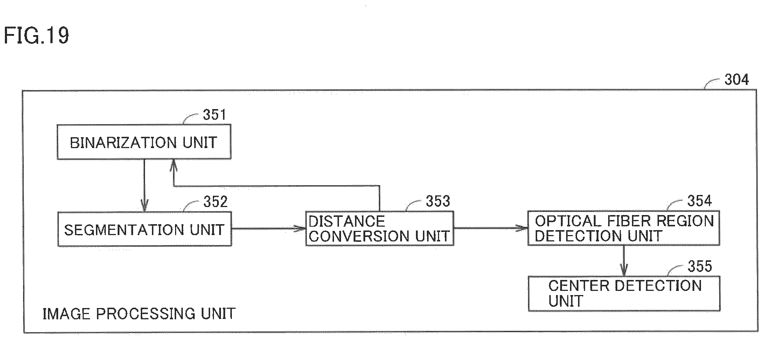

Fig. 19 is a diagram showing a configuration of image processing unit 304 according to a fifth embodiment.

Image processing unit 304 includes a binarization unit 351, a segmentation unit 352, a distance conversion unit 353, an optical fiber region detection unit 354, and a center detection unit 355.

### Binarization unit 351 binarizes the X-ray image.

From the binarized image, segmentation unit 352 detects a plurality of regions in each of which the same pixel values are in succession.

Distance conversion unit 353 generates a distance conversion image for each region.

Optical fiber region detection unit 354 generates partial region(s) by binarizing the distance conversion image of each region using an adaptive threshold value. Optical fiber region detection unit 354 selects an appropriate threshold value based on the number of the partial regions. Specifically, for each region, optical fiber region detection unit 354 finds, as a count value, the number of the partial regions in each of which pixels each having a first pixel value and each included in the binarized distance conversion image are in succession. For each region, optical fiber region detection unit 354 sequentially increases threshold value TH from the initial value until the count value is changed to be decreased so as to obtain a plurality of count values. In the case where a ratio R of threshold value TH when the count value becomes a maximum count value among the plurality of count values is equal to or more than a criterion value, optical fiber region detection unit 354 determines, as the number of the optical fibers, the number of the partial regions included in the binarized distance conversion image generated using any of the plurality of threshold values TH when the count value becomes the maximum count value.

Center detection unit 355 detects a position of any pixel in the partial region as the central position of the optical fiber.

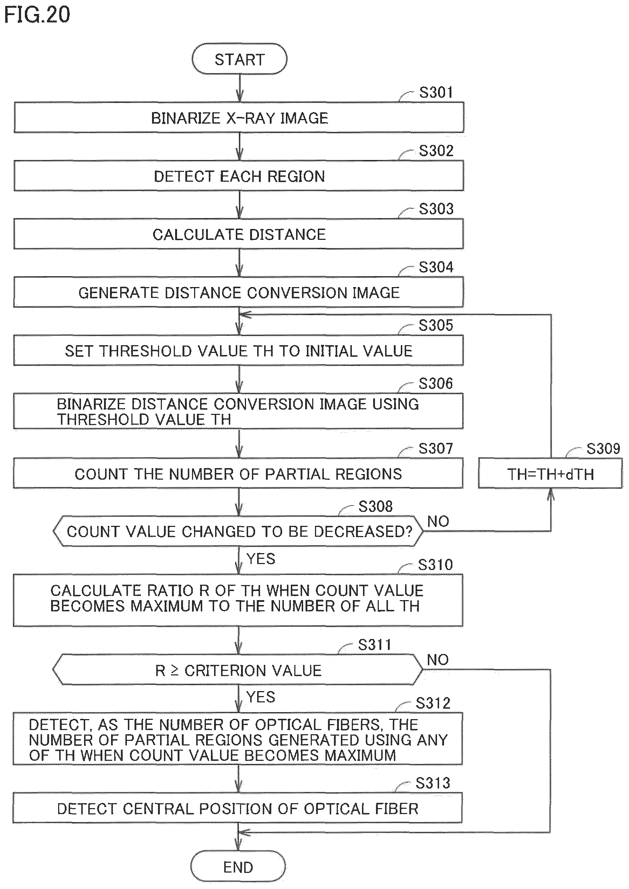

Fig. 20 is a flowchart showing a processing procedure of image processing unit 304.

In a step S301, binarization unit 351 generates a first binarized image constituted of a plurality of pixels each having a first pixel value (for example, 1) or a second pixel value (for example, 0) by binarizing the X-ray image.

In a step S302, segmentation unit 352 detects each region in which pixels each having the first pixel value in the first binarized image are in succession.

In a step S303, for each pixel having the first pixel value (corresponding to a region in which a thin wire possibly exists) in each region, distance conversion unit 353 calculates a shortest distance to a pixel having the second pixel value (corresponding to a region in which no thin wire possibly exists).

In a step S304, for each region, distance conversion unit 353 generates a distance conversion image in which the shortest distance is represented by a pixel value.

In a step S305, for each region, optical fiber region detection unit 354 sets threshold value TH to an initial value.

In a step S306, for each region, optical fiber region detection unit 354 generates a binarized distance conversion image constituted of a plurality of pixels each having the first pixel value (1) or the second pixel value (0) by binarizing the distance conversion image based on threshold value TH.

In a step S307, for each region, optical fiber region detection unit 354 finds, as a count value, the number of the partial regions in each of which pixels each having the first pixel value (1) and each included in the binarized distance conversion image are in succession.

In a step S307, when the count value is changed to be decreased, the processing proceeds to a step S310, whereas when the count value is not changed to be decreased, the processing proceeds to a step S309.

In step S309, optical fiber region detection unit 354 increases threshold value TH by a step size ΔdTH.

In step S310, for each region, optical fiber region detection unit 354 calculates ratio R of the number of threshold values TH when the count value becomes the maximum count value among the plurality of count values to the number of all the set threshold values TH.

In a step S311, for each region, when ratio R is equal to or more than the criterion value, the processing proceeds to a step S312.

In step S312, for each region, optical fiber region detection unit 354 determines, as the number of the optical fibers, the number of one or more partial regions generated using any of the plurality of threshold values (for example, a maximum threshold value, a minimum threshold value, or an average value of the both) when the count value becomes the maximum count value.

In a step S313, center detection unit 355 detects, as the central position of the optical fiber, the position of any of the pixels in the one or more partial regions. For example, optical fiber region detection unit 354 may detect, as the central position of the optical fiber, the position of the pixel having the largest pixel value in the distance conversion image or the position of the pixel at the center of gravity of the partial region among the pixels in the partial region.

### (Sixth Embodiment)

The present embodiment relates to a method of manufacturing optical cable 400 that conforms to the quality criterion described in the fourth embodiment. That is, the present embodiment relates to a method of manufacturing the optical cable such that the indicator {the inverse number of (ME+3SD)} is 20 mm or more when the average value of the (N-2) × M curvature radii at maximum is represented by ME and the standard deviation of the (N-2) × M curvature radii at maximum is represented by SD.

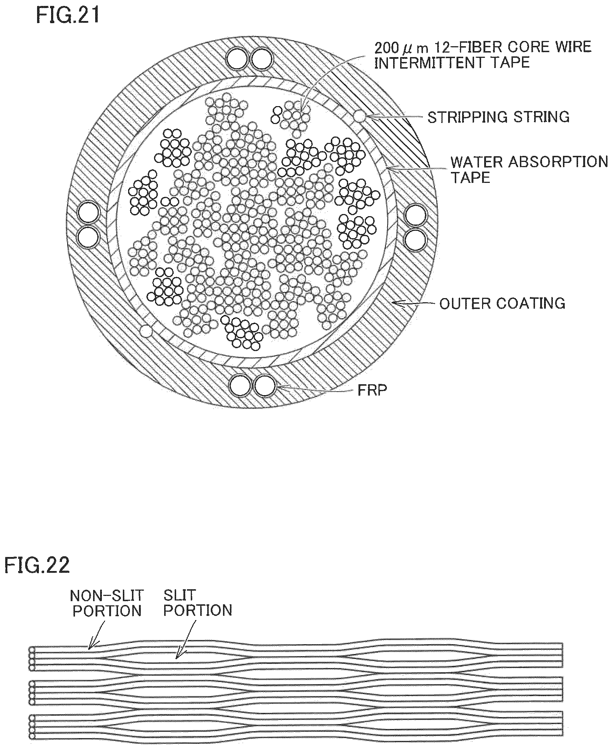

Fig. 21 is a cross sectional view of the optical cable. Fig. 22 is a diagram showing the bundle of the plurality of optical fibers.

In the method of manufacturing the optical cable according to the present embodiment, an inner diameter of an outer coating is adjusted by reducing the density of the optical fibers so as to reduce a side pressure of each of the optical fibers, a material of the outer coating is adjusted so as to reduce a difference in thermal expansion from each of the optical fibers, and a taped core wire is made flexible by adjusting a ratio of slit portions and non-slit portions, for example. As a measure of last resort, optical fibers each resistant to curving may be used.

### (Seventh Embodiment)

In evaluation device 302 described in each of the first to sixth embodiments, digital circuit hardware or software may be employed for a corresponding operation.

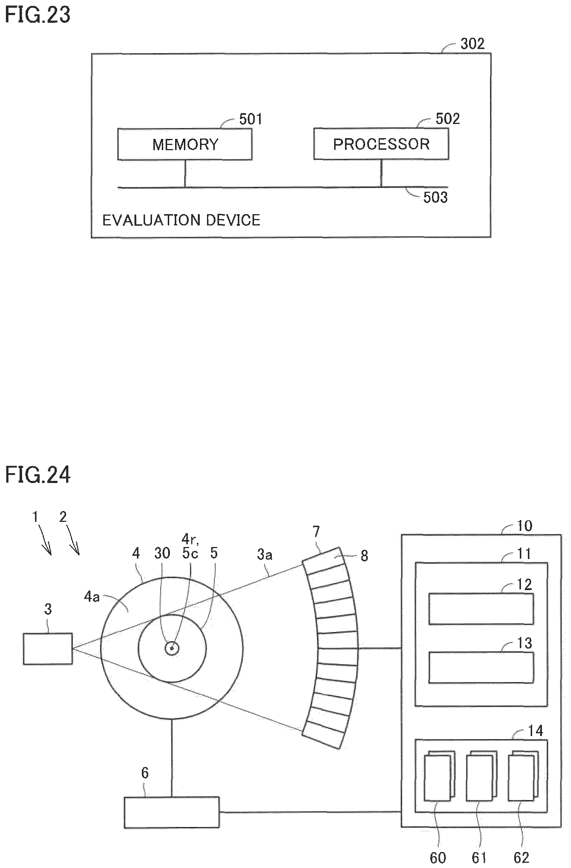

Fig. 23 is a diagram showing a configuration of evaluation device 302 when a function of evaluation device 302 is implemented using software. Evaluation device 302 includes a processor 502 and a memory 501 each connected to a bus 503. Processor 502 executes a program stored in memory 501.

### (Other Indicator)

Indicator calculation unit 305 may calculate a twist pitch instead of the curvature radius of the optical fiber.

### (Appendix)

Satoshi Takeya, Development of Low-Temperature Phase-Contrast X-Ray CT Technology, National Institute of Advanced Industrial Science and Technology TODAY, Vol. 6, No. 11, p. 22 to 23 (NPL 1) published on November 1, 2006 discloses a low-temperature sample container used in a low-temperature phase-contrast X-ray CT (Computed Tomography) measurement method. This low-temperature sample container includes: a cooling container main body composed of a metal; and a liquid container composed of a metal. The cooling container main body accommodates a coolant and the liquid container. The liquid container accommodates a liquid and a sample immersed in the liquid. The liquid container is provided with a heater for controlling a temperature of the liquid. The heater is connected, through an electrical wiring, to a temperature regulator external to the low-temperature sample container. A thermocouple is connected to the temperature regulator. The thermocouple is in contact with the liquid. The sample is suspended on a rotation shaft. An X-ray passage window is provided in each of the cooling container main body and the liquid container. While rotating the rotation shaft to rotate the sample, the sample is irradiated with an X-ray having passed through the X-ray passage window of each of the cooling container main body and the liquid container. The X-ray having passed through the sample is detected.

However, in the low-temperature sample container of NPL 1, the sample is suspended on the rotation shaft. Since it is difficult to suspend a sample having a large size on the rotation shaft, it is difficult to obtain an X-ray image of the sample having a large size. The low-temperature sample container of NPL 1 is also provided with the heater and the thermocouple so as to control the temperature of the liquid. Therefore, the size of the low-temperature sample container is large and the electrical wiring needs to be provided in the low-temperature sample container. It is difficult to incorporate the low-temperature sample container into an X-ray imaging apparatus without modifying the X-ray imaging apparatus.

The disclosure of the Appendix has been made in view of the above-described problem and an object of a first aspect of the disclosure of the Appendix is to provide a cooling container by which an X-ray image of a sample having a larger size can be more readily obtained at a low temperature lower than a room temperature and which can be readily incorporated into an X-ray imaging apparatus. An object of a second aspect of the disclosure of the Appendix is to provide an X-ray apparatus by which an X-ray image of a sample having a large size can be more readily obtained at a low temperature lower than a room temperature and which can utilize an X-ray imaging apparatus. An object of a third aspect of the disclosure of the Appendix is to provide an X-ray image processing device and an X-ray image processing method each suitable for the cooling container in the disclosure of the Appendix.

A cooling container according to the disclosure of the Appendix includes a hollow container and a heat insulating container that accommodates the hollow container. The hollow container includes a tube and a bottom plate. The tube includes a first end and a second end opposite to the first end. The bottom plate closes the first end of the tube. A sample and a coolant that cools the sample are accommodated in an accommodation space defined by the tube and the bottom plate. The sample is immersed in the coolant and is supported by at least one of the tube or the bottom plate. Each of the tube and the insulating container is composed of a low-density material. A first opening communicating with the accommodation space is provided in the second end of the tube. A through hole communicating with the first opening is provided in the heat insulating container.

An X-ray apparatus according to the disclosure of the Appendix includes an X-ray imaging apparatus and the cooling container according to the disclosure of the Appendix. The X-ray imaging apparatus includes an X-ray source that emits an X-ray, a stage that supports the cooling container, and an X-ray detector that detects the X-ray having passed through the cooling container.

An X-ray image processing device according to the disclosure of the Appendix includes: an X-ray image receiving unit that receives an X-ray image of a sample, the X-ray image being obtained by imaging the sample for a first period of time at a low temperature lower than a room temperature; and an image processing unit. The image processing unit inputs the X-ray image of the sample into a neural network so as to generate a corrected X-ray image of the sample, the corrected X-ray image being clearer than the X-ray image of the sample. The neural network is generated by learning using a training data set. The training data set includes a first reference X-ray image and a second reference X-ray image, the first reference X-ray image being obtained by imaging a reference sample for a second period of time without cooling the reference sample, the second reference X-ray image being obtained by imaging the reference sample for a third period of time without cooling the reference sample. The second period of time is 0.5 times or more and 2.0 times or less as long as the first period of time. The third period of time is longer than the first period of time and is longer than the second period of time.

An X-ray image processing method according to the disclosure of the Appendix includes: obtaining an X-ray image of a sample by imaging the sample for a first period of time at a low temperature lower than a room temperature using the X-ray apparatus according to the disclosure of the Appendix; and inputting the X-ray image of the sample into a neural network so as to generate a corrected X-ray image of the sample, the corrected X-ray image being clearer than the X-ray image of the sample. The neural network is generated by learning using a training data set. The training data set includes a first reference X-ray image and a second reference X-ray image, the first reference X-ray image being obtained by imaging a reference sample for a second period of time using the X-ray apparatus according to the disclosure of the Appendix without cooling the reference sample, the second reference X-ray image being obtained by imaging the reference sample for a third period of time using the X-ray apparatus according to the disclosure of the Appendix without cooling the reference sample. The second period of time is 0.5 times or more and 2.0 times or less as long as the first period of time. The third period of time is longer than the first period of time and is longer than the second period of time.

According to the cooling container in the disclosure of the Appendix, an X-ray image of a sample having a larger size can be more readily obtained at a low temperature lower than a room temperature. The cooling container according to the disclosure of the Appendix can be readily incorporated into an X-ray imaging apparatus.

According to the X-ray apparatus in the disclosure of the Appendix, an X-ray image of a sample having a larger size can be more readily obtained at a low temperature lower than a room temperature, and an X-ray imaging apparatus can be used.

The X-ray image processing device according to the disclosure of the Appendix is an X-ray image processing device suitable for the cooling container according to the disclosure of the Appendix by which an X-ray imaging time at a low temperature lower than a room temperature is short. The X-ray image processing method according to the disclosure of the Appendix is an X-ray image processing method suitable for the cooling container according to the disclosure of the Appendix by which an X-ray imaging time at a low temperature lower than a room temperature is short.

### [Description of Embodiments of Disclosure of Appendix]

First, embodiments of the disclosure of the Appendix will be listed and described.
(1) A cooling container 5 according to the disclosure of the Appendix includes a hollow container 20 and a heat insulating container 35 that accommodates hollow container 20. Hollow container 20 includes a tube 22 and a bottom plate 21. Tube 22 includes a first end 22a and a second end 22b opposite to first end 22a. Bottom plate 21 closes first end 22a of tube 22. A sample 30 and a coolant 33 that cools sample 30 are accommodated in an accommodation space 22e defined by tube 22 and bottom plate 21. Sample 30 is immersed in coolant 33 and is supported by at least one of tube 22 or bottom plate 21. Each of tube 22 and insulating container 35 is composed of a low-density material. A first opening 23 communicating with accommodation space 22e is provided in second end 22b of tube 22. A through hole 39 communicating with first opening 23 is provided in heat insulating container 35.

Since each of tube 22 and heat insulating container 35 is composed of a low-density material, each of tube 22 and heat insulating container 35 can allow X-ray 3a to pass therethrough. Sample 30 is immersed in coolant 33 and is supported by at least one of tube 22 or bottom plate 21. Therefore, an X-ray image 60 of sample 30 having a larger size can be more readily obtained at a low temperature lower than a room temperature.

In cooling container 5 according to the disclosure of the Appendix, first opening 23 is provided in second end 22b of tube 22, and through hole 39 is provided in heat insulating container 35. Even when each of the temperatures of sample 30 and coolant 33 is gradually increased to change part of coolant 33 into gas during capturing of an fluoroscopic X-ray image of sample 30, this gas is discharged to the outside of cooling container 5 through first opening 23 and through hole 39. Cooling container 5 can be prevented from being broken by this gas. Therefore, a temperature regulation function can be omitted from cooling container 5. Cooling container 5 according to the disclosure of the Appendix can be readily incorporated into X-ray imaging apparatus 2 without modifying X-ray imaging apparatus 2. Cost of cooling container 5 can be reduced. In the present specification, cooling container 5 having no temperature regulation function means that an active temperature regulation element (for example, a Peltier element or a heater) for actively regulating each of the temperature of coolant 33 and the temperature of sample 30 is not provided in cooling container 5.

Cooling container 5 according to the disclosure of the Appendix includes heat insulating container 35. Therefore, even though cooling container 5 does not have the temperature regulation function, the temperature increase of each of sample 30 and coolant 33 during the capturing of X-ray image 60 of sample 30 can be moderate. A period of time for capturing X-ray image 60 of sample 30 at the low temperature lower than the room temperature can be long. A degree of clearness of X-ray image 60 of sample 30 at the low temperature lower than the room temperature can be improved.

(2) In cooling container 5 according to (1), tube 22 has a cylindrical shape. An outer surface of a portion of heat insulating container 35 that covers tube 22 has a cylindrical outer surface shape. Therefore, cooling container 5 may be disposed closer to X-ray source 3 of X-ray imaging apparatus 2. A magnification of X-ray image 60 of sample 30 can be large.

(3) In cooling container 5 according to (1) or (2), tube 22 is in contact with both coolant 33 and heat insulating container 35. Therefore, cooling container 5 has a simple configuration. Cooling container 5 can be readily incorporated into X-ray imaging apparatus 2 without modifying X-ray imaging apparatus 2. Cost of cooling container 5 can be reduced.

(4) In cooling container 5 according to any one of (1) to (3), heat insulating container 35 covers an entire outer surfaces 22c of tube 22. Therefore, the temperature increase of each of sample 30 and coolant 33 during the capturing of X-ray image 60 of sample 30 can be moderate. A period of time for capturing X-ray image 60 of sample 30 at the low temperature lower than the room temperature can be long. A degree of clearness of X-ray image 60 of sample 30 at the low temperature lower than the room temperature can be improved.

(5) In cooling container 5 according to any one of (1) to (4), heat insulating container 35 covers an entire outer surface of hollow container 20. Therefore, the temperature increase of each of sample 30 and coolant 33 during the capturing of X-ray image 60 of sample 30 can be moderate. A period of time for capturing X-ray image 60 of sample 30 at the low temperature lower than the room temperature can be long. A degree of clearness of X-ray image 60 of sample 30 at the low temperature lower than the room temperature can be improved.

(6) In the cooling container 5 according to any one of (1) to (5), heat insulating container 35 includes a first heat insulating member 36 in contact with bottom plate 21, and a second heat insulating member 38 in contact with tube 22 and first heat insulating member 36. Therefore, hollow container 20 can be readily accommodated in heat insulating container 35. Cooling container 5 can be readily incorporated into X-ray imaging apparatus 2 without modifying X-ray imaging apparatus 2.

(7) In cooling container 5 according to (6), a recess 37 is formed in first heat insulating member 36. Second heat insulating member 38 is fitted into recess 37. Therefore, hollow container 20 can be readily accommodated in heat insulating container 35. Cooling container 5 can be readily incorporated into X-ray imaging apparatus 2 without modifying X-ray imaging apparatus 2.

(8) In cooling container 5 according to any one of (1) to (7), tube 22 is composed of a fluorine-based resin or a polyethylene resin. Therefore, tube 22 is composed of a low-density material that does not become brittle even when cooled by coolant 33. X-ray image 60 of sample 30 having a larger size can be more readily obtained at the low temperature lower than the room temperature.

(9) In cooling container 5 according to (8), tube 22 is composed of polytetrafluoroethylene or perfluoroalkoxy alkane. Therefore, tube 22 is composed of a low-density material that does not become brittle even when cooled by coolant 33. X-ray image 60 of sample 30 having a larger size can be more readily obtained at the low temperature lower than the room temperature.

(10) In cooling container 5 according to any one of (1) to (9), heat insulating container 35 is composed of polystyrene foam. Heat insulating container 35 is composed of such an inexpensive material. Cost of cooling container 5 can be reduced.

(11) In cooling container 5 according to any one of (1) to (10), coolant 33 is a mixture of dry ice and alcohol. Such an inexpensive coolant 33 can be used to keep sample 30 at the low temperature lower than the room temperature. X-ray image 60 of sample 30 having a larger size can be more readily obtained at the low temperature lower than the room temperature.

(12) In cooling container 5 according to any one of (1) to (11), hollow container 20 further includes a fixing member 25. Sample 30 is supported with respect to tube 22 using fixing member 25. Fixing member 25 is provided with a second opening 27 extending through fixing member 25 along a long-side direction of tube 22. Therefore, with fixing member 25, sample 30 having a larger size can be more stably supported. X-ray image 60 of sample 30 having a larger size can be more readily obtained at the low temperature lower than the room temperature.

(13) An X-ray apparatus 1 according to the disclosure of the Appendix includes an X-ray imaging apparatus 2 and cooling container 5 according to any one of (1) to (11). X-ray imaging apparatus 2 includes an X-ray source 3 that emits an X-ray, a stage 4 that supports cooling container 5, and an X-ray detector 7 that detects the X-ray having passed through cooling container 5. In X-ray apparatus 1 according to the disclosure of the Appendix, sample 30 is cooled using cooling container 5 according to the disclosure of the Appendix. Therefore, X-ray image 60 of sample 30 having a larger size can be more readily obtained at the low temperature lower than the room temperature. X-ray imaging apparatus 2 can be used without modifying X-ray imaging apparatus 2.

(14) In X-ray apparatus 1 according to (13), stage 4 is configured to rotate cooling container 5 about a central axis 5c of cooling container 5 extending along a long-side direction of tube 22, and is movable along the long-side direction of tube 22. Therefore, X-ray apparatus 1 can more readily obtain an X-ray CT image of sample 30 having a larger size.

(15) An X-ray image processing device (terminal device 200) according to the disclosure of the Appendix includes an X-ray image receiving unit 220 and an image processing unit 221. X-ray image receiving unit 220 receives an X-ray image 60 of a sample 30, X-ray image 60 being obtained by imaging sample 30 for a first period of time at a low temperature lower than a room temperature. Image processing unit 221 inputs X-ray image 60 of sample 30 into a neural network (trained model 113) so as to generate a corrected X-ray image 66 of sample 30, corrected X-ray image 66 being clearer than X-ray image 60 of sample 30. The neural network is generated by learning using a training data set 115. Training data set 115 includes a first reference X-ray image 61 and a second reference X-ray image 62, first reference X-ray image 61 being obtained by imaging a reference sample 31 for a second period of time without cooling reference sample 31, second reference X-ray image 62 being obtained by imaging reference sample 31 for a third period of time without cooling reference sample 31. The second period of time is 0.5 times or more and 2.0 times or less as long as the first period of time. The third period of time is longer than the first period of time and is longer than the second period of time.

During the capturing of X-ray image 60 of sample 30, each of the temperatures of sample 30 and coolant 33 is gradually increased. In order to capture X-ray image 60 of sample 30 at the low temperature lower than the room temperature, it is necessary to shorten the first period of time. When the first period of time is short, X-ray image 60 of sample 30 cooled to the low temperature lower than the room temperature becomes unclear. The X-ray image processing device according to the disclosure of the Appendix can more clarify X-ray image 60 of sample 30 cooled to the low temperature lower than the room temperature. The X-ray image processing device according to the disclosure of the Appendix is suitable for cooling container 5 according to the disclosure of the Appendix by which the X-ray imaging time (first period of time) at the low temperature lower than the room temperature is short.

(16) An X-ray image processing method according to the disclosure of the Appendix includes: obtaining (for example, steps S1 to S6) an X-ray image 60 of a sample 30 by imaging sample 30 for a first period of time at a low temperature lower than a room temperature using X-ray apparatus 1 according to (13) or (14); and inputting (step S22) X-ray image 60 of sample 30 into a neural network (trained model 113) so as to generate a corrected X-ray image 66 of sample 30, corrected X-ray image 66 being clearer than X-ray image 60 of sample 30. The neural network is generated by learning using a training data set 115. Training data set 115 includes a first reference X-ray image 61 and a second reference X-ray image 62, first reference X-ray image 61 being obtained by imaging a reference sample 31 for a second period of time using X-ray apparatus 1 without cooling reference sample 31, second reference X-ray image 62 being obtained by imaging reference sample 31 for a third period of time using X-ray apparatus 1 without cooling reference sample 31. The second period of time is 0.5 times or more and 2.0 times or less as long as the first period of time. The third period of time is longer than the first period of time and is longer than the second period of time.

During the capturing of X-ray image 60 of sample 30, each of the temperatures of sample 30 and coolant 33 is gradually increased. In order to capture X-ray image 60 of sample 30 at the low temperature lower than the room temperature, it is necessary to shorten the first period of time. When the first period of time period is short, X-ray image 60 of sample 30 cooled to the low temperature lower than the room temperature becomes unclear. The X-ray image processing method according to the disclosure of the Appendix can more clarify X-ray image 60 of sample 30 cooled to the low temperature lower than the room temperature. The X-ray image processing method according to the disclosure of the Appendix is suitable for the cooling container 5 according to the disclosure of the Appendix by which the X-ray imaging time (first period of time) at the low temperature lower than the room temperature is short.

### [Details of Embodiments of Disclosure of Appendix]

Next, the embodiments of the disclosure of the Appendix will be described in detail with reference to figures. It should be noted that in each of the below-described figures, the same or corresponding portions are denoted by the same reference characters and will not be described repeatedly. At least part of configurations of the embodiments described below may be freely combined.

### <Low-Temperature X-Ray Apparatus 1>

In the following description, a low-temperature X-ray apparatus 1 may be referred to as "X-ray apparatus 1" for the sake of simplicity.

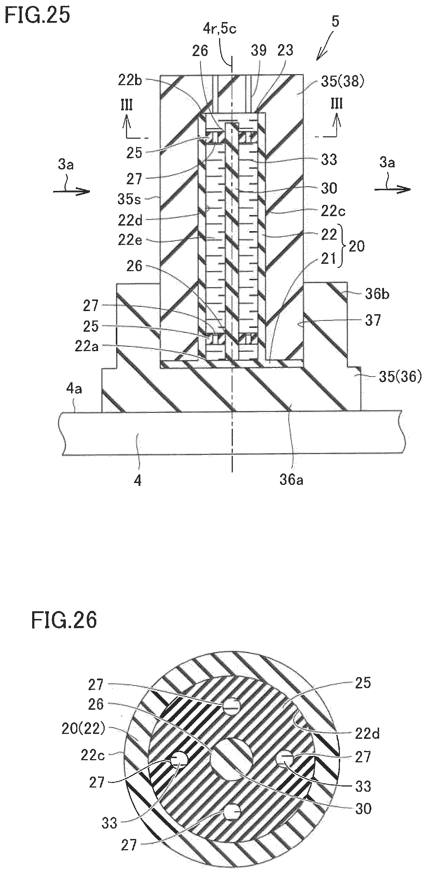

X-ray apparatus 1 is, for example, an X-ray CT (computed tomography) apparatus. Referring to Figs. 24 and 25, X-ray apparatus 1 includes an X-ray imaging apparatus 2 and a cooling container 5.

X-ray imaging apparatus 2 includes an X-ray source 3, a stage 4, and an X-ray detector 7. X-ray imaging apparatus 2 may further include a stage driving device 6 and a computer 10.

X-ray source 3 emits an X-ray 3a toward a sample 30. X-ray source 3 is, for example, an X-ray tube.

Stage 4 supports cooling container 5. Cooling container 5 is placed on a sample placement surface 4a. Stage 4 is rotatable about a rotation axis 4r of stage 4. Rotation axis 4r of stage 4 is, for example, an axis extending along a normal line of sample placement surface 4a. Stage 4 is movable along the normal line of sample placement surface 4a (rotation axis 4r of stage 4). When cooling container 5 is placed on sample placement surface 4a of stage 4, stage 4 is rotatable about central axis 5c of cooling container 5 extending along a long-side direction of tube 22 of cooling container 5, and is movable along the long-side direction of tube 22 of cooling container 5 (central axis 5c of cooling container 5).

Stage driving device 6 includes a motor (not shown). Stage driving device 6 rotates stage 4 about rotation axis 4r of stage 4. Stage driving device 6 moves stage 4 along the normal line of sample placement surface 4a (rotation axis 4r of stage 4). When cooling container 5 is placed on sample placement surface 4a of stage 4, stage driving device 6 rotates cooling container 5 about central axis 5c of cooling container 5 extending along the long-side direction of tube 22 of cooling container 5, and moves cooling container 5 along the long-side direction of tube 22 of cooling container 5 (central axis 5c of cooling container 5).

X-ray detector 7 detects X-ray 3a having passed through sample 30. When sample 30 is included in cooling container 5, X-ray detector 7 detects X-ray 3a having passed through sample 30 and cooling container 5. X-ray detector 7 may include a plurality of X-ray detection elements 8. Each of the plurality of X-ray detection elements 8 may include a photodiode (not shown) and a scintillator (not shown) provided on the photodiode. The scintillator converts X-ray 3a into light. The photodiode detects the light converted from the X-ray by the scintillator. By applying X-ray 3a to sample 30 while rotating sample 30, a fluoroscopic X-ray image of sample 30 in the entire peripheral direction of sample 30 is captured by X-ray detector 7.

Computer 10 includes a processor 11 and a storage 14.

Processor 11 is a CPU (Central Processing Unit). Processor 11 implements each of functions of a control unit 12 and an image reconstruction unit 13 by executing a program stored in storage 14. Control unit 12 controls X-ray imaging apparatus 2. By controlling stage driving device 6 by control unit 12, stage 4 is rotated about rotation axis 4r of stage 4 and is moved along the normal line of sample placement surface 4a (rotation axis 4r of stage 4). Image reconstruction unit 13 reconstructs the fluoroscopic X-ray image of sample 30 in the entire peripheral direction of sample 30 using a CT reconstruction algorithm such as a back projection method or a successive approximation method, and generates an X-ray CT image of sample 30 as an X-ray image 60 of sample 30.

Storage 14 may be, for example, a non-volatile memory device such as a hard disk or a SSD (solid state drive). X-ray image 60 of sample 30 is stored in storage 14.

### <Cooling Container 5>

Referring to Figs. 24 to 26, cooling container 5 is a container for cooling sample 30. Cooling container 5 has central axis 5c. When cooling container 5 is placed on sample placement surface 4a of stage 4, central axis 5c of cooling container 5 coincides with rotation axis 4r of stage 4. Cooling container 5 may have an elongated shape in a direction in which central axis 5c of cooling container 5 extends. The long-side direction of cooling container 5 may be the direction in which central axis 5c of cooling container 5 extends. Cooling container 5 includes a hollow container 20 and a heat insulating container 35.

Hollow container 20 includes a tube 22 and a bottom plate 21. Hollow container 20 may further include a fixing member 25.

Tube 22 is composed of a low-density material. In the present specification, the low-density material means a material having a density of 2.8 g/cm3 or less. The low-density material can permit passage of an X-ray. X-ray 3a passes through tube 22. The low-density material may have a density of 2.3 g/cm3 or less. The low-density material may have a density of 0.9 g/cm3 or more. The low-density material may have a density of 2.0 g/cm3 or more. The low-density material may have a density of 0.9 g/cm3 or more and 2.8 g/cm3 or less. The low-density material may have a density of 2.0 g/cm3 or more and 2.3 g/cm3 or less. Tube 22 is composed of a material that does not become brittle even when cooled by coolant 33. Tube 22 is composed of, for example, a material that does not become brittle at a temperature of - 70°C or more. Tube 22 may be composed of a material that does not become brittle at a temperature of -100°C or more. Tube 22 is composed of, for example, a fluorine-based resin such as polytetrafluoroethylene (PTFE) or perfluoroalkoxy alkane (PFA), or a polyethylene resin.

Tube 22 has a cylindrical shape. Tube 22 includes an outer surface 22c and an inner surface 22d opposite to outer surface 22c. X-ray 3a passes through outer surface 22c and inner surface 22d. Tube 22 includes a first end 22a and a second end 22b opposite to first end 22a. Each of outer surface 22c and inner surface 22d extends from first end 22a to second end 22b. Outer surface 22c has, for example, a cylindrical outer surface shape. Inner surface 22d has, for example, a cylindrical inner surface shape.

Bottom plate 21 closes first end 22a of tube 22. Accommodation space 22e of tube 22 is defined by tube 22 and bottom plate 21. Bottom plate 21 may be composed of a low-density material. Bottom plate 21 is composed of a material that does not become brittle even when cooled by coolant 33. Bottom plate 21 is composed of, for example, a material that does not become brittle at a temperature of -70°C or more. Bottom plate 21 may be composed of a material that does not become brittle at a temperature of -100°C or more. Bottom plate 21 is composed of, for example, a fluorine-based resin such as polytetrafluoroethylene (PTFE) or perfluoroalkoxy alkane (PFA), or a polyethylene resin. Bottom plate 21 may be composed of the same material as that of tube 22. A first opening 23 communicating with accommodation space 22e is provided in second end 22b of tube 22.

Sample 30 and coolant 33 are accommodated in accommodation space 22e. Sample 30 is supported by at least one of tube 22 or bottom plate 21. Sample 30 may be supported by both tube 22 and bottom plate 21.

Sample 30 may be supported with respect to tube 22 using fixing member 25. Fixing member 25 is in contact with inner surface 22d of tube 22. Fixing member 25 may be fitted to tube 22. Fixing member 25 is provided with a through hole 26. Sample 30 may be fitted into through hole 26. Fixing member 25 is provided with a second opening 27. Second opening 27 extends through fixing member 25 along the long-side direction of tube 22. Fixing member 25 is composed of a low-density material. Fixing member 25 is composed of a material that does not become brittle even when cooled by coolant 33. Fixing member 25 is composed of, for example, a material that does not become brittle at a temperature of -70°C or more. Fixing member 25 may be composed of a material that does not become brittle at a temperature of -100°C or more. Fixing member 25 is composed of, for example, polystyrene foam. Sample 30 may be supported with respect to tube 22 using a plurality of fixing members 25. The plurality of fixing members 25 may support, for example, an upper portion of sample 30 and a lower portion of sample 30. Therefore, even when the size of sample 30 is large, sample 30 is stably supported by the plurality of fixing members 25.

Sample 30 is immersed in coolant 33. Specifically, a portion of sample 30 may be immersed in coolant 33, or a whole of sample 30 may be immersed in coolant 33. Coolant 33 cools sample 30 to a low temperature lower than a room temperature. In the present specification, the room temperature means a temperature of 15°C or more and 30°C or less. The low temperature may be, for example, a temperature of less than 0°C, a temperature of -10°C or less, a temperature of -20°C or less, a temperature of -30°C or less, or a temperature of -40°C or less. Coolant 33 is in contact with inner surface 22d of tube 22. Coolant 33 is, for example, a mixture of dry ice and alcohol (for example, ethanol).

Heat insulating container 35 accommodates hollow container 20. Heat insulating container 35c is in contact with outer surface 22c of tube 22. Insulating container 35 may cover an entire outer surface 22c of tube 22. Insulating container 35 may cover an entire outer surface of hollow container 20. Heat insulating container 35 may include a first heat insulating member 36 and a second heat insulating member 38. First heat insulating member 36 is in contact with bottom plate 21. A recess 37 may be formed in first heat insulating member 36. Specifically, first heat insulating member 36 may include a base portion 36a and an annular protrusion 36b protruding from base portion 36a. Recess 37 is an inner space of annular protrusion 36b. Second heat insulating member 38 is in contact with tube 22 (outer surface 22c) and first heat insulating member 36. Second heat insulating member 38 is fitted into recess 37.

Heat insulating container 35 is composed of a low-density material. Therefore, heat insulating container 35 can permit passage of X-ray 3a. X-ray 3a passes through heat insulating container 35. Heat insulating container 35 may be composed of a material that does not become brittle even when cooled by coolant 33. Heat insulating container 35 may be composed of a material that does not become brittle at a temperature of -70°C or more. Heat insulating container 35 may be composed of a material that does not become brittle at a temperature of -100°C or more. Heat insulating container 35 is composed of, for example, polystyrene foam. Heat insulating container 35 includes an outer surface 35s. X-ray 3a passes through a portion of outer surface 35s that covers tube 22 (for example, the outer surface of second heat insulating member 38). A portion of outer surface 35s that covers tube 22 has a cylindrical outer surface shape. Heat insulating container 35 is provided with a through hole 39 communicating with first opening 23. Through hole 39 is provided, for example, in second heat insulating member 38.

Cooling container 5 may not have a temperature regulation function. Therefore, during capturing of the fluoroscopic X-ray image of sample 30, each of the temperatures of sample 30 and coolant 33 is gradually increased. Part of coolant 33 is changed into a gas. This gas passes through second opening 27 of fixing member 25, first opening 23 of tube 22, and through hole 39 of heat insulating container 35, and is discharged to the outside of cooling container 5. Each of second opening 27 of fixing member 25, first opening 23 of tube 22, and through hole 39 of heat insulating container 35 functions as a gas-release hole for this gas, and prevents cooling container 5 from being broken by the gas.

### <Method of Obtaining X-ray Image 60 of Sample 30>

An exemplary method of obtaining, using X-ray apparatus 1, X-ray image 60 of sample 30 cooled to the low temperature lower than the room temperature will be described with reference to Figs. 24 to 27. When X-ray apparatus 1 is an X-ray CT apparatus, X-ray image 60 of sample 30 is an X-ray CT image of sample 30.

The method of obtaining X-ray image 60 of sample 30 according to the Appendix includes introducing sample 30 and coolant 33 into cooling container 5 (step S1). Sample 30 is supported by at least one of tube 22 or bottom plate 21. Sample 30 may be supported by both tube 22 and bottom plate 21. Sample 30 may be supported with respect to tube 22 using fixing member 25. Coolant 33 cools sample 30 to the low temperature lower than the room temperature.

The method of obtaining X-ray image 60 of sample 30 according to the Appendix includes placing cooling container 5 on stage 4 (step S2). Specifically, cooling container 5 is placed on sample placement surface 4a of stage 4. Central axis 5c of cooling container 5 coincides with rotation axis 4r of stage 4.

The method of obtaining X-ray image 60 of sample 30 according to the Appendix includes moving cooling container 5 in the long-side direction of tube 22 (step S3). Specifically, control unit 12 controls stage driving device 6. Stage 4 is moved along the long-side direction of tube 22. In this way, an area of sample 30 for which a fluoroscopic X-ray image is desired to be obtained is located on a path of X-ray 3a.

The method of obtaining X-ray image 60 of sample 30 according to the Appendix includes capturing the fluoroscopic X-ray image of sample 30 while rotating cooling container 5 (step S4). Specifically, control unit 12 controls stage driving device 6. Stage 4 is rotated about rotation axis 4r of stage 4 (central axis 5c of cooling container 5). Cooling container 5 placed on sample placement surface 4a of stage 4 is rotated about central axis 5c (rotation axis 4r of stage 4) of cooling container 5. Sample 30 included in cooling container 5 is rotated about central axis 5c of cooling container 5 (rotation axis 4r of stage 4). By applying X-ray 3a to sample 30 while rotating sample 30, the fluoroscopic X-ray image of sample 30 in the entire peripheral direction of sample 30 is captured by X-ray detector 7. The fluoroscopic X-ray image of sample 30 is stored into storage 14.

The method of obtaining X-ray image 60 of sample 30 according to the Appendix includes determining whether or not capturing of fluoroscopic X-ray images of all the areas of sample 30 for which the fluoroscopic X-ray images are desired to be obtained has been ended (step S5). For example, control unit 12 performs step S5. When capturing of fluoroscopic X-ray images of parts of all the areas of sample 30 for which the fluoroscopic X-ray images are desired to be obtained has not been ended (NO in step S5), steps S3 and S4 are performed. In this way, steps S3 and S4 are repeated until the fluoroscopic X-ray images of all the areas of sample 30 for which the fluoroscopic X-ray images are desired to be obtained are obtained.

When the capturing of the fluoroscopic X-ray images of all the areas of sample 30 for which the fluoroscopic X-ray images are desired to be obtained has been ended (YES in step S5), each of the fluoroscopic X-ray images of sample 30 is reconstructed to generate an X-ray CT image of sample 30 as X-ray image 60 of sample 30 (step S6). Specifically, image reconstruction unit 13 reconstructs the fluoroscopic X-ray image of sample 30 in the entire peripheral direction of sample 30 using a CT reconstruction algorithm such as a back projection method or a successive approximation method so as to generate the X-ray CT image of sample 30. X-ray image 60 of sample 30 is stored into storage 14.

X-ray image 60 of sample 30 is obtained by imaging sample 30 at the low temperature lower than the room temperature for a first period of time. In the Appendix, cooling container 5 has no temperature regulation function. Therefore, each of the temperatures of sample 30 and coolant 33 is gradually increased during the capturing of X-ray image 60 of sample 30. In order to capture X-ray image 60 of sample 30 at the low temperature lower than the room temperature, it is necessary to shorten the first period of time. The first period of time is defined by a permissible temperature change ΔT for the X-ray imaging of sample 30 at the low temperature lower than the room temperature. Permissible temperature change ΔT may be, for example, 10°C or less, 8°C or less, 5°C or less, 3°C or less, or 1°C or less. When the first period of time period is short, X-ray image 60 of sample 30 cooled to the low temperature lower than the room temperature becomes unclear.

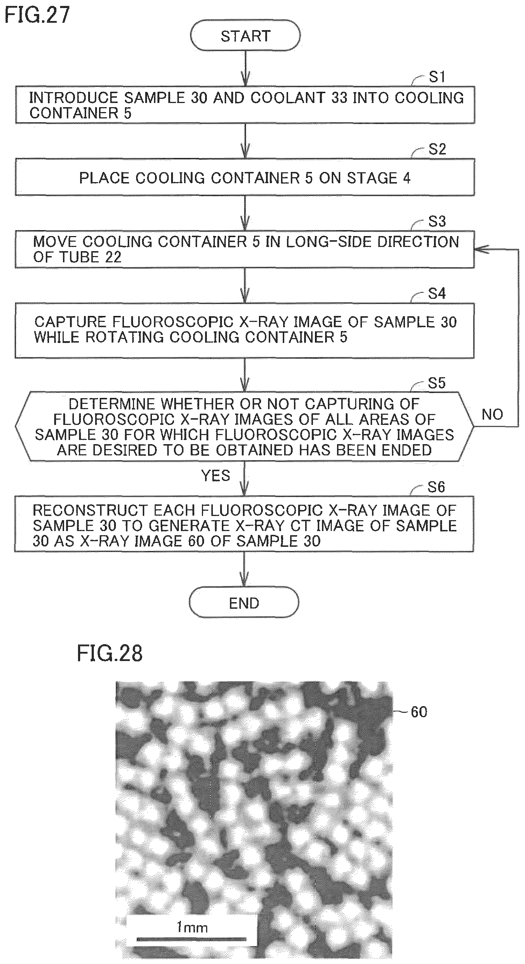

Referring to Fig. 28, an exemplary X-ray image 60 of sample 30 is shown. In Fig. 28, sample 30 is an optical fiber cable including a plurality of optical fibers and a sheath that covers the plurality of optical fibers. X-ray image 60 of sample 30 is an X-ray CT image of the optical fiber cable, the X-ray CT image being obtained by applying an X-ray for the first period of time at a low temperature of -30°C to -40°C. A white region in X-ray image 60 of sample 30 shown in Fig. 28 represents the plurality of optical fibers, whereas a black background region in X-ray image 60 of sample 30 shown in Fig. 28 represents the sheath.

### (Modifications of X-Ray Apparatus 1 and Method of Obtaining X-Ray Image 60 of Sample 30)

X-ray apparatus 1 may be, for example, a fluoroscopic X-ray imaging apparatus in which image reconstruction unit 13 is omitted, and X-ray image 60 may be, for example, a fluoroscopic X-ray image. In the case of obtaining the fluoroscopic X-ray image using the fluoroscopic X-ray imaging apparatus, the rotating of cooling container 5 in step S4 as well as step S6 are omitted from the method of obtaining X-ray image 60 of sample 30 as shown in Fig. 27.

### (Method of Obtaining Plurality of First Reference X-Ray Images 61 and Plurality of Second Reference X-Ray Images 62)

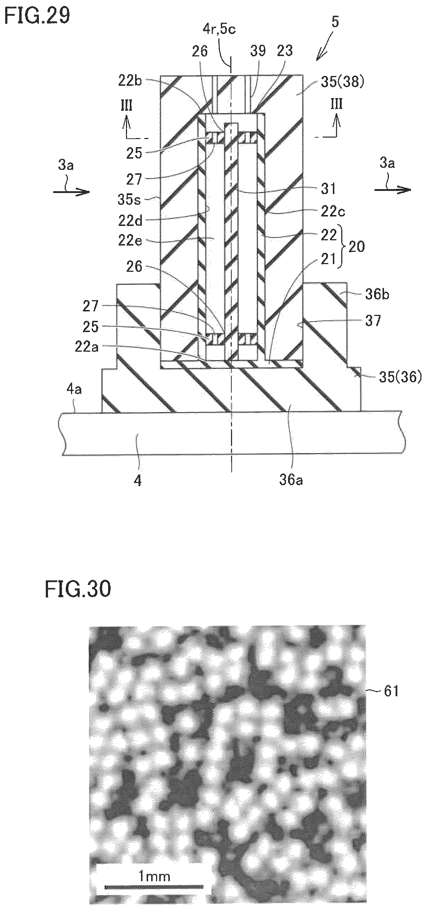

Referring to Figs. 24, 29, and 30, a plurality of first reference X-ray images 61 are obtained by imaging a plurality of areas of reference sample 31 for a second period of time using X-ray apparatus 1 without cooling reference sample 31. The imaging of reference sample 31 using X-ray apparatus 1 without cooling reference sample 31 means, for example, capturing of an X-ray image of reference sample 31 in cooling container 5 without introducing coolant 33 in cooling container 5 (see Fig. 29), or means capturing of an X-ray image of reference sample 31 with reference sample 31 being placed on sample placement surface 4a of stage 4 without using cooling container 5. The second period of time is substantially the same as the first period of time, which is the imaging time for X-ray image 60 of sample 30 at the low temperature lower than the room temperature. The second period of time is, for example, 0.5 times or more and 2.0 times or less as long as the first period of time. The plurality of first reference X-ray images 61 may be obtained, for example, by using X-ray apparatus 1 to apply X-ray 3a to reference sample 31 at the room temperature for the second period of time that is the same as the first period of time. Reference sample 31 may be different from or the same as sample 30. The plurality of first reference X-ray images 61 are stored into storage 14.

Referring to Fig. 30, an exemplary first reference X-ray image 61 is shown. In Fig. 30, reference sample 31 is an optical fiber cable including a plurality of optical fibers and a sheath that covers the plurality of optical fibers. First reference X-ray image 61 is an X-ray CT image of the optical fiber cable, the X-ray CT image being obtained by applying the X-ray at the room temperature for the second period of time that is the same as the first period of time. Since the second period of time is substantially the same as the first period of time, first reference X-ray image 61 is unclear.

Referring to Figs. 24, 29, and 31, the plurality of second reference X-ray images 62 are obtained by imaging a plurality of areas of reference sample 31 for a third period of time using X-ray apparatus 1 without cooling reference sample 31. The plurality of second reference X-ray images 62 may be obtained, for example, by using X-ray apparatus 1 to apply X-ray 3a to reference sample 31 at the room temperature for the third period of time. The plurality of second reference X-ray images 62 are stored into storage 14.

Imaging conditions for first reference X-ray image 61 and imaging conditions for second reference X-ray image 62 are different from each other mainly in terms of the imaging time (period of time of application of X-ray 3a to reference sample 31). That is, the third period of time, which is the imaging time for second reference X-ray image 62, is longer than the second period of time, which is the imaging time for first reference X-ray image 61. The third period of time may be, for example, 2 times or more as long as the second period of time, 2.5 times or more as long as the second period of time, 4 times or more as long as the second period of time, 5 times or more as long as the second period of time, 8 times or more as long as the second period of time, or 10 times or more as long as the second period of time. Since the third period of time is longer than the second period of time, second reference X-ray image 62 is clearer than first reference X-ray image 61.

Further, the third period of time, which is the imaging time for second reference X-ray image 62, is longer than the first period of time, which is the imaging time for X-ray image 60 of sample 30. The third period of time may be, for example, 4 times or more as long as the first period of time, 5 times or more as long as the first period of time, 8 times or more as long as the first period of time, or 10 times or more as long as the first period of time.

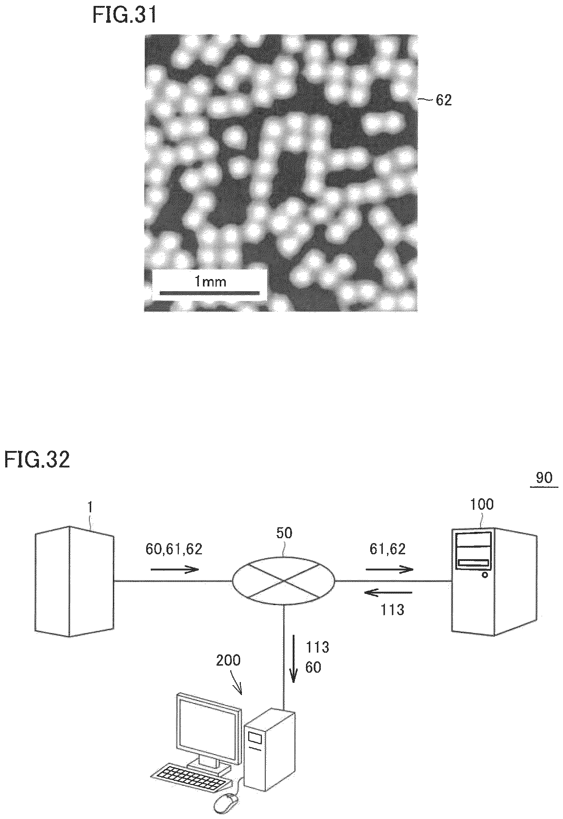

Referring to Fig. 31, an exemplary second reference X-ray image 62 is shown. In Fig. 31, reference sample 31 is the optical fiber cable described above. Second reference X-ray image 62 is an X-ray CT image of the optical fiber cable, the X-ray CT image being obtained by applying an X-ray for the third period of time at the room temperature. Since the third period of time is longer than the second period of time, second reference X-ray image 62 is clearer than first reference X-ray image 61.

The temperature of reference sample 31 when capturing second reference X-ray image 62 is preferably equal to the temperature of reference sample 31 when capturing first reference X-ray image 61, but the temperature of reference sample 31 when capturing second reference X-ray image 62 may be different from the temperature of reference sample 31 when capturing first reference X-ray image 61. When the temperature of reference sample 31 when capturing second reference X-ray image 62 is different from the temperature of reference sample 31 when capturing first reference X-ray image 61, a difference between the temperature of reference sample 31 when capturing the plurality of second reference X-ray images 62 and the temperature of reference sample 31 when capturing the plurality of first reference X-ray images 61 is smaller than a difference between the temperature of reference sample 31 when capturing the plurality of first reference X-ray images 61 and the temperature (low temperature) of sample 30 when capturing X-ray image 60 of sample 30. The difference between the temperature of reference sample 31 when capturing the plurality of second reference X-ray images 62 and the temperature of reference sample 31 when capturing the plurality of first reference X-ray images 61 may be equal to or less than half, 1/3, or 1/4 of the difference between the temperature of reference sample 31 when capturing the plurality of first reference X-ray images 61 and the temperature (low temperature) of sample 30 when capturing X-ray image 60 of sample 30.

The difference between the temperature of reference sample 31 when capturing the plurality of second reference X-ray images 62 and the temperature of reference sample 31 when capturing the plurality of first reference X-ray images 61 may be, for example, 5°C or less, 3°C or less, or 1°C or less. The difference between the temperature of reference sample 31 when capturing the plurality of first reference X-ray images 61 and the temperature (low temperature) of sample 30 when capturing X-ray image 60 of sample 30 may be, for example, 10°C or more, 20°C or more, 30°C or more, or 40°C or more.

A reference image ID (not shown) assigned to correspond to each area of reference sample 31 is stored in storage 14 together with a first reference X-ray image 61 and a second reference X-ray image 62 each corresponding to the area of reference sample 31.

### <Image Processing System 90>

As described above, each of the temperatures of sample 30 and coolant 33 is gradually increased while capturing X-ray image 60 of sample 30. In order to capture X-ray image 60 of sample 30 at the low temperature lower than the room temperature, it is necessary to shorten the first period of time for capturing X-ray image 60 of sample 30. Therefore, X-ray image 60 of sample 30 cooled to the low temperature lower than the room temperature becomes unclear. Therefore, it is necessary to perform image processing for clarifying X-ray image 60 of sample 30 cooled to the low temperature lower than the room temperature. The image processing for clarifying X-ray image 60 of sample 30 is, for example, super-resolution processing for improving the resolution of X-ray image 60 of sample 30. Referring to Fig. 32, the following describes an image processing system 90 for clarifying X-ray image 60 of sample 30 cooled to the temperature lower than the room temperature.

Image processing system 90 includes a server device 100 and a terminal device 200. Image processing system 90 is connected to a computer 10 (see Fig. 24) of X-ray apparatus 1 via a communication network 50 such as the Internet.

### (Server Device 100)

Server device 100 obtains the reference image IDs (not shown), the plurality of first reference X-ray images 61, and the plurality of second reference X-ray images 62 from computer 10 (see Fig. 24) of X-ray apparatus 1 via communication network 50.

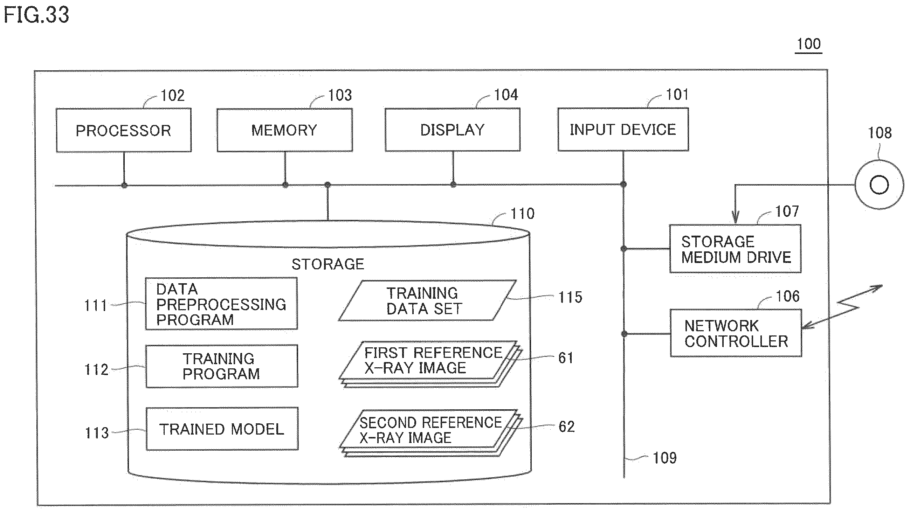

Server device 100 generates a trained model 113 for performing image processing for clarifying X-ray image 60 of sample 30, by learning processing using first reference X-ray images 61 and second reference X-ray images 62. Trained model 113 generated is stored into a storage 110 (see Fig. 33) and is transmitted (distributed) to terminal device 200.

### (Terminal Device 200)

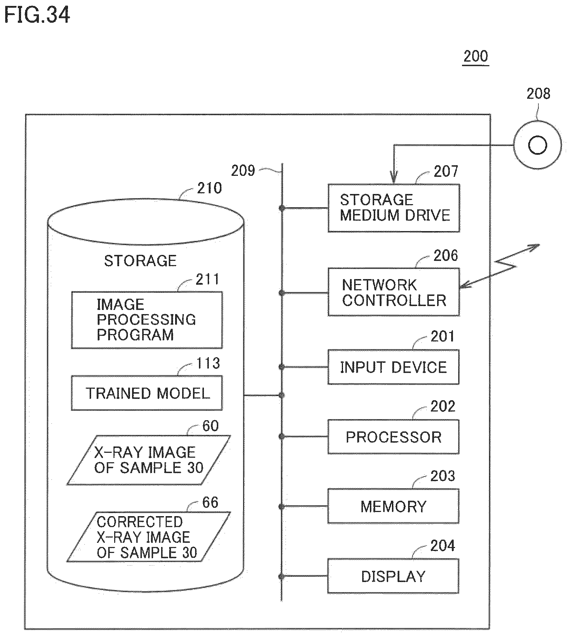

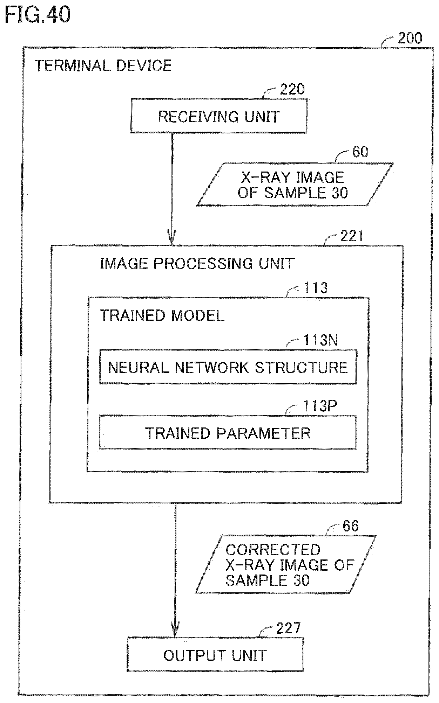

Terminal device 200 obtains trained model 113 from server device 100 via communication network 50. Trained model 113 is stored into a storage 210 (see Fig. 34). Terminal device 200 obtains X-ray image 60 of sample 30 from computer 10 of X-ray apparatus 1. X-ray image 60 of sample 30 is stored into storage 210. Terminal device 200 inputs X-ray image 60 of sample 30 into trained model 113. X-ray image 60 of sample 30 is subjected to image processing by trained model 113. Trained model 113 outputs a corrected X-ray image 66 (see Figs. 34 and 40) of sample 30, corrected X-ray image 66 being clearer than X-ray image 60 of sample 30. Corrected X-ray image 66 of sample 30 is stored into storage 210 or is displayed on a display 204 (see Fig. 34).

### <Hardware Configuration>

### (Server Device 100)

Referring to Fig. 33, server device 100 includes an input device 101, a processor 102, a memory 103, display 104, a network controller 106, a storage medium drive 107, and storage 110.

Input device 101 receives various input operations. Input device 101 is, for example, a keyboard, a mouse, or a touch panel.

Display 104 displays information necessary for processing in server device 100. Display 104 may display, for example, first reference X-ray image 61, second reference X-ray image 62, and a provisional corrected X-ray image 65. Display 104 is, for example, an LCD (Liquid Crystal Display) or an organic EL (Electroluminescence) display.

Processor 102 executes a below-described program to perform processing necessary for implementing a function of server device 100. Processor 102 is constituted of, for example, one or a plurality of CPUs or GPUs (Graphics Processing Units). A CPU or GPU having a plurality of cores may be used as processor 102. In server device 100, it is preferable to employ a GPU or the like suitable for learning processing for generating trained model 113.

Memory 103 provides a memory area for temporarily storing a program code, a work memory, or the like when processor 102 executes a program including a data preprocessing program 111, a training program 112, and the like. Memory 103 is, for example, a volatile memory device such as a DRAM (Dynamic Random Access Memory) or an SRAM (Static Random Access Memory).

Network controller 106 transmits and receives a program or data to and from any apparatus or the like including X-ray apparatus 1 and terminal device 200 via communication network 50 (see Fig. 32). For example, network controller 106 receives data such as the reference image IDs (not shown), the plurality of first reference X-ray images 61, and the plurality of second reference X-ray images 62 from X-ray apparatus 1 via communication network 50. Network controller 106 transmits trained model 113 to terminal device 200 via communication network 50. Network controller 106 supports an appropriate communication method such as Ethernet (registered trademark), wireless LAN (Local Area Network), or Bluetooth (registered trademark).

Storage medium drive 107 is a device that reads a program or data stored in storage medium 108. Further, storage medium drive 107 may be a device for writing a program or data to storage medium 108. Storage medium 108 is a non-transitory storage medium, and stores a program or data in a non-volatile manner. Storage medium 108 is, for example, an optical storage medium such as an optical disk (for example, a CD-ROM or a DVD-ROM), a semiconductor storage medium such as a flash memory or a USB (universal serial bus) memory, a magnetic storage medium such as a hard disk, an FD (flexible disk), or a storage tape, or a magneto-optical storage medium such as a MO (magneto-optical) disk.

Storage 110 stores a program (including, for example, data preprocessing program 111, training program 112, and the like) to be executed by processor 102, the reference image IDs (not shown), the plurality of first reference X-ray images 61, the plurality of second reference X-ray images 62, trained model 113, and a training data set 115. Data preprocessing program 111 is a program for generating training data set 115. Training program 112 is a program for generating trained model 113 using training data set 115. Storage 110 is, for example, a non-volatile memory device such as a hard disk or an SSD.

The program for implementing the function of server device 100, which includes data preprocessing program 111, training program 112, and the like, may be stored in a non-transitory storage medium, may be distributed, and may be installed in storage 110. The program for implementing the function of server device 100 may be downloaded to server device 100 via the Internet or an intranet.

In the Appendix, it is illustratively described that a general-purpose computer (processor 102) implements the function of server device 100 by executing the program including data preprocessing program 111, training program 112, and the like; however, it is not limited thereto, and a whole or part of the function of server device 100 may be implemented using an integrated circuit such as an ASIC (Application Specific Integrated Circuit) or an FPGA (Field-Programmable Gate Array).

### (Terminal Device 200)

Referring to Fig. 34, terminal device 200 includes an input device 201, a processor 202, a memory 203, display 204, a network controller 206, a storage medium drive 207, and storage 210.

Input device 201 receives various input operations. Input device 201 is, for example, a keyboard, a mouse, or a touch panel.

Display 204 displays information or the like necessary for processing in terminal device 200. Display 204 displays, for example, corrected X-ray image 66 of sample 30. Display 204 is, for example, an LCD (Liquid Crystal Display) or an organic EL (Electroluminescence) display.

Processor 202 executes a below-described program to perform processing necessary for implementing the function of terminal device 200. Processor 202 includes, for example, one or a plurality of CPUs or GPUs. A CPU or GPU having a plurality of cores may be used as processor 202.

Memory 203 provides a memory area for temporarily storing a program code, a work memory, or the like when processor 202 executes a program. Memory 203 is, for example, a volatile memory device such as a DRAM or an SRAM.

Network controller 206 transmits and receives a program or data to and from any apparatus or the like including X-ray apparatus 1 and server device 100 via communication network 50 (see Fig. 32). For example, network controller 206 receives data such as X-ray image 60 of sample 30 from X-ray apparatus 1 via communication network 50. Network controller 206 receives trained model 113 from server device 100 via communication network 50. Network controller 206 supports any communication method such as Ethernet (registered trademark), wireless LAN, or Bluetooth (registered trademark).

Storage medium drive 207 is a device that reads a program or data stored in storage medium 208. Further, storage medium drive 207 may be a device for writing a program or data to storage medium 208. Storage medium 208 is a non-transitory storage medium, and stores a program or data in a non-volatile manner. Storage medium 208 is, for example, an optical storage medium such as an optical disk (for example, a CD-ROM or a DVD-ROM), a semiconductor storage medium such as a flash memory or a USB memory, a magnetic storage medium such as a hard disk, an FD, or a storage tape, or a magneto-optical storage medium such as an MO disk.

Storage 210 stores a program (including, for example, image processing program 211 and the like) to be executed by processor 202, trained model 113, X-ray image 60 of sample 30, and corrected X-ray image 66 of sample 30. Image processing program 211 is a program for inputting X-ray image 60 of sample 30 into trained model 113 so as to generate corrected X-ray image 66 of sample 30. Storage 210 is, for example, a non-volatile memory device such as a hard disk or an SSD.

The program for implementing the function of terminal device 200, which includes image processing program 211 and the like, may be stored in a non-transitory storage medium, may be distributed, and may be installed in storage 210. The program for implementing the function of terminal device 200 may be downloaded to terminal device 200 via the Internet or an intranet.

In the Appendix, it is illustratively described that a general-purpose computer (processor 202) implements the function of terminal device 200 by executing the program including image processing program 211 and the like; however, it is not limited thereto, and a whole or part of the function of terminal device 200 may be implemented using an integrated circuit such as an ASIC or an FPGA.

### <Generation of Trained Model 113>

The learning processing (the method of generating trained model 113) according to the Appendix will be described with reference to Figs. 32 and 35 to 39. The learning processing according to the Appendix is performed by, for example, server device 100. Server device 100 functions as a trained model generation device.

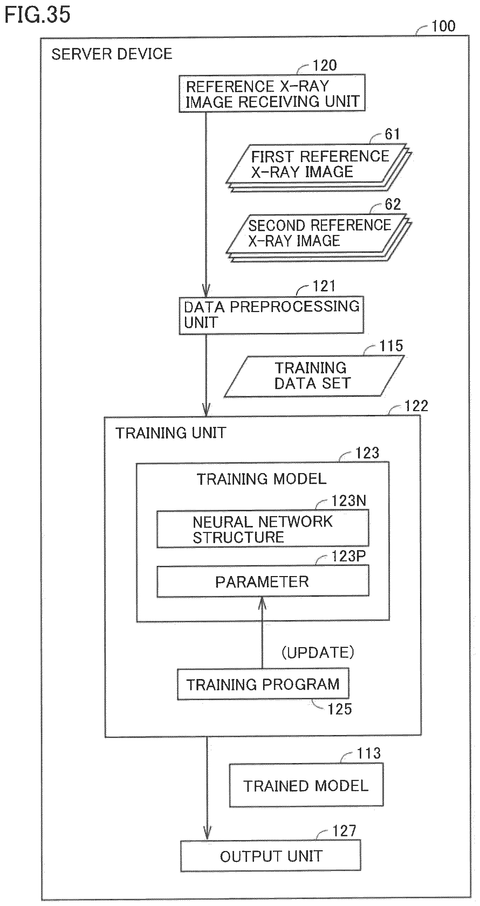

Referring to Fig. 35, server device 100 includes a reference X-ray image receiving unit 120, a data preprocessing unit 121, a training unit 122, and an output unit 127. Training unit 122 includes a training model 123 and a training program 125. Training model 123 is constituted of a neural network structure 123N and a parameter 123P. Neural network structure 123N is a neural network structure classified as a deep neural network (DNN), and includes, for example, a convolutional neural network (CNN) structure. Neural network structure 123N may include a plurality of convolutional layers. Neural network structure 123N is constructed in advance and is stored in server device 100 (storage 110).

Reference X-ray image receiving unit 120 receives the reference image IDs, the plurality of first reference X-ray images 61, and the plurality of second reference X-ray images 62 from X-ray apparatus 1. Reference X-ray image receiving unit 120 stores the reference image IDs, the plurality of first reference X-ray images 61, and the plurality of second reference X-ray images 62 into storage 110.

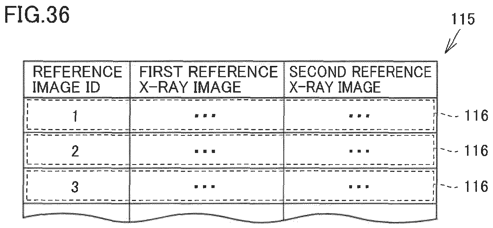

Data preprocessing unit 121 reads the reference image IDs, the plurality of first reference X-ray images 61, and the plurality of second reference X-ray images 62 from storage 110. Data preprocessing unit 121 generates training data set 115 by associating the reference image IDs, first reference X-ray images 61 corresponding to the reference images ID among the plurality of first reference X-ray images 61, and second reference X-ray images 62 corresponding to the reference image IDs among the plurality of second reference X-ray images 62. As shown in Fig. 36, training data set 115 includes a plurality of groups of data (training data 116). Each of the plurality of groups of data (each piece of training data 116) includes a reference image ID, a first reference X-ray image 61 corresponding to the reference image ID, and a second reference X-ray image 62 corresponding to the reference image ID. In order to improve accuracy of training of training model 123, data preprocessing unit 121 may scale up each of the plurality of first reference X-ray images 61 and the plurality of second reference X-ray images 62 to a desired size by using a bicubic interpolation method or the like.

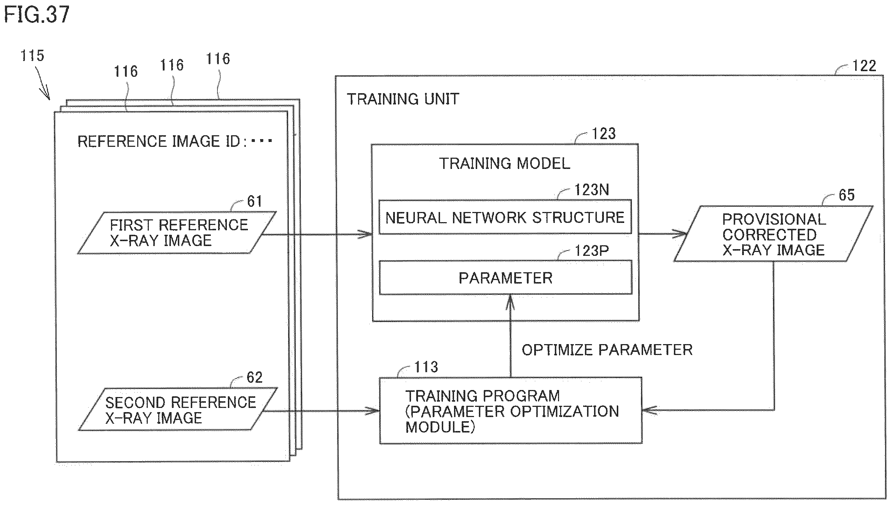

Referring to Figs. 35 and 37, training unit 122 generates trained model 113. Training unit 122 updates a value of a parameter 123P of training model 123 by machine learning using training data set 115.

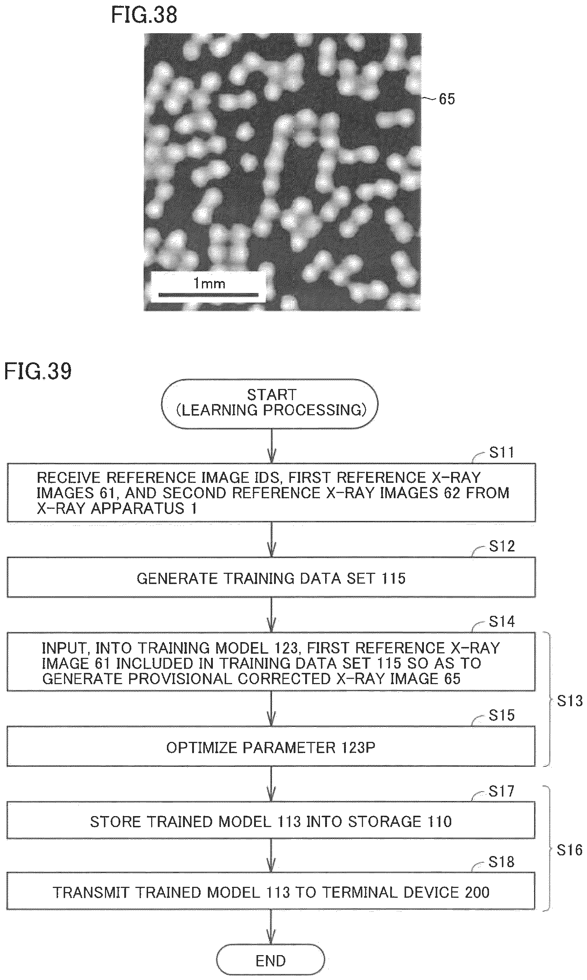

Specifically, training unit 122 updates the value of parameter 123P by using training program 125. Training program 125 inputs first reference X-ray image 61 of training data set 115 into training model 123. Training model 123 outputs a provisional corrected X-ray image 65. Referring to Fig. 38, an exemplary provisional corrected X-ray image 65 is shown. In Fig. 38, reference sample 31 is the optical fiber cable described above. Training program 125 repeatedly updates and optimizes parameter 123P so as to minimize an error between provisional corrected X-ray image 65 and a corresponding second reference X-ray image 62. Specifically, parameter 123P of training model 123 is repeatedly updated and optimized so as to minimize an error between provisional corrected X-ray image 65 obtained by inputting a first reference X-ray image 61 having a reference image ID of "1" into training model 123 and a second reference X-ray image 62 having the reference image ID of "1". Similarly, for each of the other reference image IDs, parameter 123P of training model 123 is repeatedly updated and optimized so as to minimize an error between provisional corrected X-ray image 65 and corresponding second reference X-ray image 62. When the training of training model 123 is ended, trained model 113 is generated.

Referring to Fig. 40, trained model 113 includes a neural network structure 113N and a trained parameter 113P. Neural network structure 113N is a neural network structure classified as a deep neural network (DNN), and includes, for example, a convolutional neural network (CNN) structure. Neural network structure 113N may include a plurality of convolutional layers. Trained parameter 113P is a parameter 123P for which the updating has been completed.

Referring to Fig. 35, output unit 127 outputs trained model 113. Specifically, output unit 127 stores trained model 113 into storage 110. Output unit 127 transmits trained model 113 stored in storage 110 to terminal device 200 through network controller 206.

The learning processing method according to the Appendix will be described with reference to Fig. 39. The learning processing method according to the Appendix is performed by, for example, server device 100. Each step shown in Fig. 39 is implemented by executing, by processor 102 of server device 100, a program including data preprocessing program 111 (see Fig. 33) and training program 112 (see Fig. 33), for example.

The learning processing method according to the Appendix includes receiving the reference image IDs, the plurality of first reference X-ray images 61, and the plurality of second reference X-ray images 62 from X-ray apparatus 1 (step S11). Reference X-ray image receiving unit 120 (see Fig. 35) performs step S11. Reference X-ray image receiving unit 120 stores the reference image IDs, the plurality of first reference X-ray images 61, and the plurality of second reference X-ray images 62 into storage 110.

The learning processing method according to the Appendix includes generating training data set 115 (step S12). Training data set 115 is generated by associating the reference image IDs, first reference X-ray images 61 corresponding to the reference images ID among the plurality of first reference X-ray images 61, and second reference X-ray images 62 corresponding to the reference image IDs among the plurality of second reference X-ray images 62. Data preprocessing unit 121 (see Fig. 35) reads the reference image IDs, the plurality of first reference X-ray images 61, and the plurality of second reference X-ray images 62 stored in storage 110, and performs step S12. In order to improve the accuracy of training of training model 123, data preprocessing unit 121 may scale up each of the plurality of first reference X-ray images 61 and the plurality of second reference X-ray images 62 to a desired size by using a bicubic interpolation method or the like. Data preprocessing unit 121 stores training data set 115 into storage 110.

The learning processing method according to the Appendix includes inputting training data set 115 into training model 123 so as to generate trained model 113 (step S13). Training unit 122 (see Fig. 35) performs step S13. Specifically, step S13 includes a step S14 and a step S15. In step S14, first reference X-ray image 61 included in training data set 115 is input into training model 123 so as to generate provisional corrected X-ray image 65. In step S14, parameter 123P of training model 123 is repeatedly updated and optimized so as to minimize an error between provisional corrected X-ray image 65 and a corresponding second reference X-ray image 62. For example, parameter 123P of training model 123 is repeatedly updated and optimized so as to minimize an error between provisional corrected X-ray image 65 obtained by inputting a first reference X-ray image 61 having a reference image ID of "1 " into training model 123 and a second reference X-ray image 62 having the reference image ID of "1". Similarly, for each of the other reference image IDs, parameter 123P of training model 123 is repeatedly updated and optimized so as to minimize an error between provisional corrected X-ray image 65 and corresponding second reference X-ray image 62. Thus, trained model 113 is generated from training model 123.

The learning processing method according to the Appendix includes outputting trained model 113 (step S16). Output unit 127 (see Fig. 35) performs step S16. Step S16 includes, for example, a step S17 and a step S18. In step S17, output unit 127 stores trained model 113 into storage 210. In step S18, output unit 127 transmits trained model 113 to terminal device 200. Specifically, output unit 127 reads trained model 113 from storage 210, and transmits trained model 113 to terminal device 200 through network controller 206. Trained model 113 is stored into storage 210 (see Fig. 34). In this way, the learning processing method according to the Appendix is completed.

### <Image Processing Using Trained Model 113>

The image processing according to the Appendix using trained model 113 will be described with reference to Figs. 32 and 40 to 42. The image processing according to the Appendix is performed by terminal device 200, for example. Terminal device 200 functions as an X-ray image processing device.

As shown in Fig. 40, terminal device 200 includes an X-ray image receiving unit 220, an image processing unit 221, and an output unit 227. Image processing unit 221 includes trained model 113.

X-ray image receiving unit 220 receives X-ray image 60 of sample 30 from X-ray apparatus 1. X-ray image receiving unit 220 stores X-ray image 60 of sample 30 into storage 210.

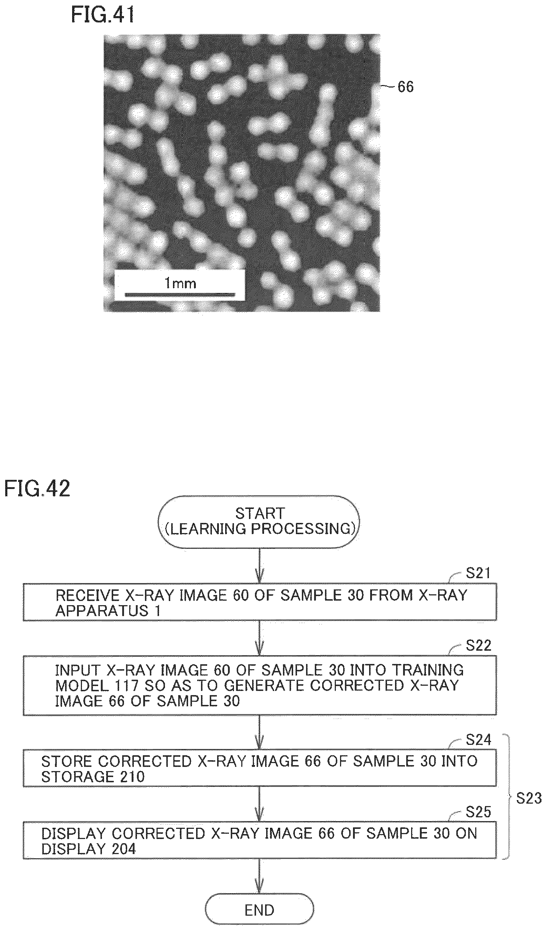

Image processing unit 221 inputs X-ray image 60 of sample 30 into trained model 113 so as to generate corrected X-ray image 66 of sample 30. Trained model 113 is trained by first reference X-ray image 61 captured for the second period of time that is substantially the same length as that of the first period of time and second reference X-ray image 62 captured for the third period of time that is longer than each of the first period of time and the second period of time. Therefore, a degree of clearness of corrected X-ray image 66 of sample 30 is improved as compared with a degree of clearness of X-ray image 60 of sample 30. For example, corrected X-ray image 66 of sample 30 has the same degree of clearness as that of second reference X-ray image 62. Corrected X-ray image 66 of sample 30 has the same degree of clearness as that of X-ray image 60 of sample 30 obtained by imaging sample 30 for the third period of time, which is the imaging time for second reference X-ray image 62 at the low temperature lower than the room temperature. Referring to Fig. 41, an exemplary corrected X-ray image 66 is shown. In Fig. 41, sample 30 is the optical fiber cable described above.

Output unit 227 outputs corrected X-ray image 66 of sample 30. For example, output unit 227 stores corrected X-ray image 66 of sample 30 into storage 210. Output unit 227 displays corrected X-ray image 66 of sample 30 on display 204 (see Fig. 34).

The X-ray image processing method according to the Appendix will be described with reference to Fig. 42. The X-ray image processing method according to the Appendix is performed in terminal device 200, for example. Each step shown in Fig. 42 is implemented by executing, by processor 202 of terminal device 200, a program including image processing program 211 (see Fig. 34) , for example.

The X-ray image processing method according to the Appendix includes receiving X-ray image 60 of sample 30 from X-ray apparatus 1 (step S21). X-ray image receiving unit 220 performs a step S21. X-ray image receiving unit 220 stores X-ray image 60 of sample 30 into storage 210.

The X-ray image processing method according to the Appendix includes inputting X-ray image 60 of sample 30 into trained model 113 so as to generate corrected X-ray image 66 (step S22). Image processing unit 221 performs step S22. Trained model 113 is trained by first reference X-ray image 61 captured for the second period of time that is substantially the same length as that of the first period of time and second reference X-ray image 62 captured for the third period of time that is longer than each of the first period of time and the second period of time. Therefore, the degree of clearness of corrected X-ray image 66 of sample 30 is improved as compared with the degree of clearness of X-ray image 60 of sample 30.

The X-ray image processing method according to the Appendix includes outputting corrected X-ray image 66 (step S23). Step S23 includes, for example, storing corrected X-ray image 66 into storage 210 (step S24) and displaying corrected X-ray image 66 on display 204 (step S25). Thus, the X-ray image processing method according to the Appendix is completed.

### (Modifications of Image Processing System 90 and Image Processing Method)

In an image processing system 90 according to a first modification, server device 100 and terminal device 200 may not be connected to X-ray apparatus 1 via communication network 50 so as to communicate therewith. In image processing system 90 according to the first modification, the reference image IDs, the plurality of first reference X-ray images 61, and the plurality of second reference X-ray images 62 may be transferred from X-ray apparatus 1 (storage 14) to server device 100 (storage 110) using a non-transitory storage medium. In image processing system 90 according to the first modification, X-ray image 60 of sample 30 obtained by imaging sample 30 at the low temperature lower than the room temperature for the first period of time may be transferred from X-ray apparatus 1 (storage 14) to terminal device 200 (storage 210) using a non-transitory storage medium.

An image processing system 90 according to a second modification includes server device 100, and server device 100 generates trained model 113 and performs image processing with generated trained model 113. An image processing method according to the second modification is performed by server device 100. An image processing system 90 according to a third modification includes terminal device 200, and terminal device 200 generates trained model 113 and performs image processing with generated trained model 113. An image processing method according to the third modification is performed by terminal device 200.

### (Reference Signs List for Appendix)

1: low-temperature X-ray apparatus; 2: X-ray imaging apparatus; 3: X-ray source; 3a: X-ray; 4: stage; 4a: sample placement surface; 4r: rotation axis; 5: cooling container; 5c: central axis; 6: stage driving apparatus; 7: X-ray detector; 8: X-ray detection element; 10: computer; 11: processor; 12: control unit; 13: image reconstruction unit; 14: storage; 20: hollow container; 21: bottom plate; 22: tube; 22a: first end; 22b: second end; 22c: outer surface; 22d: inner surface; 22e: accommodation space; 23: first opening; 25: fixing member; 26: through hole; 27: second opening; 30: sample; 31: reference sample; 33: coolant; 35: heat insulating container; 35s: outer surface; 36: first heat insulating member; 36a: base portion; 36b: annular protrusion; 37: recess; 38: second heat insulating member; 39: through hole; 50: communication network; 61: first reference X-ray image; 62: second reference X-ray image; 60: X-ray image; 65: provisional corrected X-ray image; 66: corrected X-ray image; 90: image processing system; 100: server device; 101: input device; 102: processor; 103: memory; 104: display; 106: network controller; 107: storage medium drive; 108: storage medium; 110: storage; 111: preprocessing program; 112, 125: training program; 113: trained model; 113N, 123N: neural network structure; 113P: trained parameter; 115: training data set; 116: training data; 120: reference X-ray image receiving unit; 121: preprocessing unit; 122: training unit; 123: training model; 123P: parameter; 127, 227: output unit; 200: terminal device; 201: input device; 202: processor; 203: memory; 204: display; 206: network controller; 207: storage medium drive; 208: storage medium; 210: storage; 211: image processing program; 220: receiving unit; 221: image processing unit.

### (Scope of Claims for Appendix)

(Appendix 1) A cooling container comprising: a hollow container including a tube and a bottom plate, the tube including a first end and a second end opposite to the first end, the bottom plate closing the first end; and a heat insulating container that accommodates the hollow container, wherein a sample and a coolant that cools the sample are accommodated in an accommodation space defined by the tube and the bottom plate, the sample is immersed in the coolant and is supported by at least one of the tube or the bottom plate, each of the tube and the heat insulating container is composed of a low-density material, a first opening communicating with the accommodation space is provided in the second end, and a through hole communicating with the first opening is provided in the heat insulating container.

(Appendix 2) The cooling container according to Appendix 1, wherein the tube has a cylindrical shape, and an outer surface of a portion of the heat insulating container that covers the tube has a cylindrical outer surface shape.

(Appendix 3) The cooling container according to Appendix 1 or 2, wherein the tube is in contact with both the coolant and the heat insulating container.

(Appendix 4) The cooling container according to any one of Appendices 1 to 3, wherein the heat insulating container covers an entire outer surface of the tube.

(Appendix 5) The cooling container according to any one of Appendices 1 to 4, wherein the heat insulating container covers an entire outer surface of the hollow container.

(Appendix 6) The cooling container according to any one of Appendices 1 to 5, wherein the heat insulating container includes a first heat insulating member in contact with the bottom plate and a second heat insulating member in contact with the tube and the first heat insulating member.

(Appendix 7) The cooling container according to Appendix 6, wherein a recess is formed in the first heat insulating member, and the second heat insulating member is fitted into the recess.

(Appendix 8) The cooling container according to any one of Appendices 1 to 7, wherein the tube is composed of a fluorine-based resin or a polyethylene resin.

(Appendix 9) The cooling container according to Appendix 8, wherein the tube is composed of polytetrafluoroethylene or perfluoroalkoxy alkane.

(Appendix 10) The cooling container according to any one of Appendices 1 to 9, wherein the heat insulating container is composed of polystyrene foam.

(Appendix 11) The cooling container according to any one of Appendices 1 to 10, wherein the coolant is a mixture of dry ice and alcohol.

(Appendix 12) The cooling container according to any one of Appendices 1 to 11, wherein the hollow container further includes a fixing member, the sample is supported with respect to the tube using the fixing member, and the fixing member is provided with a second opening extending through the fixing member along a long-side direction of the tube.

(Appendix 13) An X-ray apparatus comprising: an X-ray imaging apparatus; and the cooling container according to any one of Appendices 1 to 11, wherein the X-ray imaging apparatus includes an X-ray source that emits an X-ray, a stage that supports the cooling container, and an X-ray detector that detects the X-ray having passed through the cooling container.

(Appendix 14) The X-ray apparatus according to Appendix 13, wherein the stage is configured to rotate the cooling container about a central axis of the cooling container extending along a long-side direction of the tube, and is movable along the long-side direction of the tube.

(Appendix 15) An X-ray image processing device comprising: an X-ray image receiving unit that receives an X-ray image of a sample, the X-ray image being obtained by imaging the sample for a first period of time at a low temperature lower than a room temperature; and an image processing unit, wherein the image processing unit inputs the X-ray image of the sample into a neural network so as to generate a corrected X-ray image of the sample, the corrected X-ray image being clearer than the X-ray image of the sample, the neural network is generated by learning using a training data set, the training data set includes a first reference X-ray image and a second reference X-ray image, the first reference X-ray image being obtained by imaging a reference sample for a second period of time without cooling the reference sample, the second reference X-ray image being obtained by imaging the reference sample for a third period of time without cooling the reference sample, the second period of time is 0.5 times or more and 2.0 times or less as long as the first period of time, and the third period of time is longer than the first period of time and is longer than the second period of time.

(Appendix 16) An X-ray image processing method comprising: obtaining an X-ray image of a sample by imaging the sample for a first period of time at a low temperature lower than a room temperature using the X-ray apparatus according to Appendix 13 or 14; and inputting the X-ray image of the sample into a neural network so as to generate a corrected X-ray image of the sample, the corrected X-ray image being clearer than the X-ray image of the sample, wherein the neural network is generated by learning using a training data set, the training data set includes a first reference X-ray image and a second reference X-ray image, the first reference X-ray image being obtained by imaging a reference sample for a second period of time using the X-ray apparatus without cooling the reference sample, the second reference X-ray image being obtained by imaging the reference sample for a third period of time using the X-ray apparatus without cooling the reference sample, the second period of time is 0.5 times or more and 2.0 times or less as long as the first period of time, and the third period of time is longer than the first period of time and is longer than the second period of time.

The Appendix disclosed herein is illustrative and non-restrictive in any respect. The scope of the disclosure of the Appendix is defined by the terms of the claims, rather than the Appendix described above, and is intended to include any modifications within the scope and meaning equivalent to the terms of the claims.

### REFERENCE SIGNS LIST

1: low-temperature X-ray apparatus; 100: terminal device; 200: server device; 300: optical cable quality evaluation system; 301: normal-temperature X-ray apparatus; 302: evaluation device; 303: input unit; 304: image processing unit; 305: indicator calculation unit; 306: determination unit; 351: binarization unit; 352: segmentation unit; 353: distance conversion unit; 354: optical fiber region detection unit; 355: center detection unit; 400: optical cable; 600: display device.

## Claims

1. A method of calculating an indicator of a thin wire, the method comprising:
obtaining X-ray images of a plurality of cross sections of a cable having a plurality of thin wires, each of the plurality of cross sections being perpendicular to a long-side direction of the cable;
finding a central position of each of the plurality of thin wires from each of the X-ray images of the plurality of cross sections; and
finding an indicator representing a curve of each thin wire based on the central position of the thin wire.

2. The method of calculating an indicator of a thin wire according to claim 1, further comprising finding an indicator representing a curve of the plurality of thin wires as a whole based on the indicator representing the curve of each thin wire.

3. The method of calculating an indicator of a thin wire according to claim 2, wherein the finding the indicator representing the curve of each thin wire includes finding a locus of the thin wire by connecting central positions of the thin wire in the plurality of cross sections and calculating a local curvature radius of the thin wire based on the locus.

4. The method of calculating an indicator of a thin wire according to claim 3, wherein the finding the indicator representing the curve of the plurality of thin wires as a whole includes calculating a plurality of local curvature radii of each thin wire for the plurality of thin wires and calculating, as the indicator representing the curve of the plurality of thin wires as a whole, any one or a weighted addition/subtraction value of any two or more of an average value, a standard deviation, a minimum value, and a maximum value of the plurality of calculated local curvature radii or any one or a weighted addition/subtraction value of any two or more of an average value, a standard deviation, a minimum value, and a maximum value of local curvatures that are inverse numbers of the plurality of calculated local curvature radii.

5. The method of calculating an indicator of a cable according to claim 2, wherein the finding the indicator representing the curve of each thin wire includes finding a locus of the thin wire by connecting central positions of the thin wire in the plurality of cross sections, and calculating an extra length ratio of the thin wire based on the locus.

6. The method of calculating an indicator of a thin wire according to claim 5, wherein the finding the indicator representing the curve of the plurality of thin wires as a whole includes calculating the extra length ratio of each thin wire for the plurality of thin wires and calculating, as the indicator representing the curve of the plurality of thin wires as a whole, any one or a weighted addition/subtraction value of any two or more of an average value, a standard deviation, a minimum value, and a maximum value of the plurality of calculated extra length ratios.

7. A method of calculating an indicator of a thin wire, the method comprising:
obtaining X-ray images of a plurality of cross sections of a cable having a plurality of thin wires, each of the plurality of cross sections being perpendicular to a long-side direction of the cable;
finding a central position of each of the plurality of thin wires from each of the X-ray images of the plurality of cross sections; and
finding an indicator representing a curve of the plurality of thin wires as a whole based on the central position of each thin wire.

8. The method of calculating an indicator of a thin wire according to claim 7, wherein the finding the indicator representing the curve of the plurality of thin wires as a whole based on the central position of each thin wire includes calculating the number or wire density of the thin wires included in each of a plurality of blocks obtained by dividing each X-ray image, calculating a variance value of the numbers or wire densities of the thin wires in the plurality of blocks, and calculating, as the indicator representing the curve of the plurality of thin wires as a whole, any one or a weighted addition/subtraction value of any two or more of an average value, a standard deviation, a minimum value, and a maximum value of the variance values of the numbers or wire densities of the thin wires in the plurality of X-ray images.

9. The method of calculating an indicator of a thin wire according to any one of claims 1 to 8, wherein
the finding the central position of each of the plurality of thin wires includes
generating a first binarized image constituted of a plurality of pixels each having a first pixel value or a second pixel value by binarizing the X-ray image,
detecting each region in which pixels each having the first pixel value in the first binarized image are in succession,
for each pixel in each region, calculating a shortest distance to a pixel having the second pixel value,
for each region, generating a distance conversion image in which the shortest distance is represented by a pixel value,
for each region, generating a binarized distance conversion image constituted of a plurality of pixels each having the first pixel value or the second pixel value by binarizing the distance conversion image based on a threshold value,
for each region, finding, as a count value, the number of partial regions in each of which pixels each having the first pixel value and each included in the binarized distance conversion image are in succession, and
for each region, sequentially increasing the threshold value from an initial value until the count value is changed to be decreased so as to obtain a plurality of count values, and in a case where a ratio of the threshold value when the count value becomes a maximum count value among the plurality of count values is equal to or more than a criterion value, detecting, as the central position of the thin wire, a position of any pixel in the partial region included in the binarized distance conversion image generated using any of a plurality of the threshold values when the count value becomes the maximum count value.

10. A method of evaluating quality of an optical cable, the method comprising:
obtaining X-ray images of a plurality of cross sections of an optical cable having a plurality of optical fibers, each of the plurality of cross sections being perpendicular to a long-side direction of the optical cable;
finding a central position of each of the plurality of optical fibers from each of the X-ray images of the plurality of cross sections;
finding an indicator representing a curve of the plurality of optical fibers as a whole based on the central position of each thin wire; and
determining whether or not the optical cable conforms to a quality criterion based on a comparison between the indicator and a criterion value.

11. The method of evaluating quality of an optical cable according to claim 10, wherein
the obtaining the X-ray images of the plurality of cross sections of the optical cable having the plurality of optical fibers, each of the plurality of cross sections being perpendicular to the long-side direction of the optical cable, includes obtaining the X-ray images of the plurality of cross sections of the optical cable that is placed under an environment of -40°C,
the finding the indicator representing the curve of the plurality of optical fibers as a whole based on the central position of each optical fiber includes finding a locus of the optical fiber by connecting central positions of the optical fiber in the plurality of cross sections, calculating a plurality of local curvature radii of each optical fiber for the plurality of optical fibers based on the locus, and calculating, as the indicator representing the curve of the plurality of optical fibers as a whole, an inverse number of a sum of an average value of local curvatures and a value three times as large as a standard deviation of the local curvatures, the local curvatures being inverse numbers of the plurality of calculated local curvature radii, and
the determining includes determining that the optical cable conforms to the quality criterion when the indicator is 20 mm or more.

12. The method of evaluating quality of an optical cable according to claim 10 or 11, wherein
the finding the central position of each of the plurality of optical fibers includes
generating a first binarized image constituted of a plurality of pixels each having a first pixel value or a second pixel value by binarizing the X-ray image,
detecting each region in which pixels each having the first pixel value in the first binarized image are in succession,
for each pixel in each region, calculating a shortest distance to a pixel having the second pixel value,
for each region, generating a distance conversion image in which the shortest distance is represented by a pixel value,
for each region, generating a binarized distance conversion image constituted of a plurality of pixels each having the first pixel value or the second pixel value by binarizing the distance conversion image based on a threshold value,
for each region, finding, as a count value, the number of partial regions in each of which pixels each having the first pixel value and each included in the binarized distance conversion image are in succession, and
for each region, sequentially increasing the threshold value from an initial value until the count value is changed to be decreased so as to obtain a plurality of count values, and in a case where a ratio of the threshold value when the count value becomes a maximum count value among the plurality of count values is equal to or more than a criterion value, detecting, as the central position of the optical fiber, a position of any pixel in the partial region included in the binarized distance conversion image generated using any of a plurality of the threshold values when the count value becomes the maximum count value.

13. An optical cable comprising a plurality of optical fibers, wherein an inverse number of a sum of an average value of local curvatures of the plurality of optical fibers and a value three times as large as a standard deviation of the local curvatures at -40°C is 20 mm or more.
